Europäisches Patentamt

European Patent Office

Office européen des brevets

(19)

(11) Veröffentlichungsnummer : **0 039 900**
**B1**

(12) **EUROPÄISCHE PATENTSCHRIFT**

(45) Veröffentlichungstag der Patentschrift :
28.08.85

(51) Int. Cl.⁴ : **G 01 P   3/481**

(21) Anmeldenummer : **81103442.0**

(22) Anmeldetag : **06.05.81**

(54) Verfahren und Vorrichtung zur Messung der Winkelgeschwindigkeit eines rotierenden Körpers.

(30) Priorität : **14.05.80 DE 3018528**

(43) Veröffentlichungstag der Anmeldung :
**18.11.81 Patentblatt 81/46**

(45) Bekanntmachung des Hinweises auf die Patenterteilung : **28.08.85 Patentblatt 85/35**

(84) Benannte Vertragsstaaten :
**AT CH FR GB LI NL SE**

(56) Entgegenhaltungen :
DE-A- 2 711 593
DE-B- 1 185 406
FR-A- 2 251 941
FR-A- 2 437 648
GB-A- 2 028 557
US-A- 4 037 157

(73) Patentinhaber : **MTC Messtechnik und Optoelektronik AG**
**Avenue Jean Jacques Rousseau 5**
**CH-2000 Neuchâtel (CH)**

(72) Erfinder : **Mehnert, Walter, Dr.**
**Grillparzerstrasse 6**
**D-8012 Ottobrunn (DE)**

(74) Vertreter : **Strasser, Wolfgang, Dipl.-Phys et al**
**Patentanwälte Strohschänk, Uri & Strasser Innere Wiener Strasse 8**
**D-8000 München 80 (DE)**

Jouve, 18, rue St-Denis, 75001 Paris, France

0 039 900

**Beschreibung**

Die Erfindung betrifft ein Verfahren und eine Vorrichtung zur Messung der Winkelgeschwindigkeit eines rotierenden Körpers gemäß den Oberbegriffen der Ansprüche 1 bzw. 25.

Bei einem bekannten Verfahren bzw. einer bekannten Vorrichtung dieser Art wird die Relativdrehung zwischen dem Markierungsträger und der Abtasteinheit dadurch bewirkt, daß der als flache Kreisscheibe ausgebildete Markierungsträger in der Weise starr mit dem rotierenden Körper verbunden ist, daß die Rotationsachse durch den Mittelpunkt der sich mit dem Körper mitdrehenden Scheibe verläuft.

Um die Winkelgeschwindigkeit des Körpers mit hohem Auflösungsvermögen messen, d. h. also innerhalb einer Umdrehung auftretende Änderungen oder Schwankungen der Winkelgeschwindigkeit feststellen und zahlenmäßig erfassen zu können, ist auf der Scheibe eine Vielzahl von in Drehrichtung voneinander beabstandeten Markierungen in Form von radial verlaufenden Strichen angebracht, die eine andere Lichtdurchlässigkeit als die sie umgebenden Bereiche der Markierungsscheibe besitzen, so daß ein zur Abtasteinheit gehörender, stationär angeordneter elektro-optischer Meßfühler immer dann ein elektrisches Signal abgibt, wenn die Helligkeit eines auf ihn auffallenden, von einer auf der anderen Seite der Scheibe angeordneten Lichtquelle ausgehenden Lichtbündels durch das Vorbeilaufen eines solchen Striches geändert wird. Aus der so gewonnenen Folge von impulsförmigen elektrischen Signalen wird dann eine Information über die momentane Winkelgeschwindigkeit des rotierenden Körpers durch eine elektronische Meß- und Auswerteschaltung abgeleitet.

Die Meßgenauigkeit dieses bekannten Verfahrens wird in entscheidendem Maße von der Präzision bestimmt, mit der die Skalenstriche auf dem Markierungsträger angeordnet sind, wobei innerhalb des Pauschalbegriffs « Präzision » folgende Einzelfaktoren von besonderer Bedeutung sind :

Die einzelnen Skalentriche müssen in Drehrichtung möglichst schmal sein und zueinander möglichst genau parallel verlaufende Begrenzungskanten aufweisen ; außerdem müssen sie möglichst genau radial verlaufen und untereinander möglichst identisch sein. Weiterhin müssen die Winkelabstände der Skalenstriche, d. h. die von den Skalenstrichen bezüglich der Drehachse miteinander eingeschlossenen Winkel mit einem Höchstmaß an Genauigkeit übereinstimmen. Da es nicht genügt, wenn der bei dem bekannten Verfahren zur Verwendung kommende Markierungsträger diese Eigenschaften nur bei oder unmittelbar nach seiner Fertigstellung aufweist, sind darüberhinaus sehr hohe Anforderungen an die Maßhaltigkeit und insbesondere an die Temperaturstabilität des zur Herstellung eines solchen Markierungsträgers verwendeten Materials zu stellen.

Nach dem Stand der Technik wird daher im allgemeinen so vorgegangen, daß als Markierungsträger spezielle Glasscheiben verwendet werden, in die mit sehr aufwendigen und hohe Kosten verursachenden Verfahren die erforderliche Anzahl von Markierungen in Form sehr genau positionierter und äußerst schmaler Skalenstriche beispielsweise eingeätzt wird. Dabei ist typischerweise die Strichdicke etwa gleich dem Strichabstand und liegt häufig in einer Größenordnung von ca. 10 $\mu$. Daraus ergibt sich das weitere Problem eines sehr ungünstigen Signal-Rausch-Verhältnisses und es muß ein erheblicher elektronischschaltungstechnischer Aufwand getrieben werden, um aus dem stark verrauschten Meßfühlerausgangssignal die den einzelnen Markierungen zugeordneten Nutzsignale für die weitere Verarbeitung zu extrahieren. Darüber hinaus wird auch die maximal erreichbare Meßgenauigkeit durch dieses schlechte Signal-Rausch-Verhältnis in nachteiliger Weise beeinflußt.

Die sich aus den eben erwähnten Problemen ergebenden hohen Herstellungskosten sowohl für den Markierungsträger als auch die Auswerteelektronik haben zur Folge, daß bisher eine sehr genaue und mit hohem Auflösungsvermögen erfolgende Winkelgeschwindigkeit- bzw. Drehzahlmessung nur in solchen, zahlenmäßig begrenzten Fällen zu Einsatzt kommen konnte, in denen die Verwendung einer mit derart hohen Herstellungskosten behafteten Meßvorrichtung wirtschaftlich vertretbar war.

Demgegenüber liegt der Erfindung die Aufgabe zugrunde, ein Verfahren und eine Vorrichtung der eingangs genannten Art zu schaffen, die eine hochgenaue, gewünschtenfalls hochauflösende Winkelgeschwindigkeitsmessung unter Verwendung eines einfachen, kostengünstig herstellbaren Markierungsträgers ermöglichen.

Zur Lösung dieser Aufgabe sieht die Erfindung die in den Ansprüchen 1 (Verfahren) bzw. 25 (Vorrichtung) niedergelegten Merkmale vor.

Weiterbildungen der Erfindung sind Gegenstand der abhängigen Ansprüche.

Bei der Erfindung wird also von einem Markierungsträger ausgegangen, auf dem eine gewünschte Anzahl von Markierungen über die von dem Meßfühler der Abtasteinrichtung bei der Relativdrehung überstrichene Bahn in etwa gleichförmig verteilt angeordnet sind, ohne daß dabei ein besonderer Aufwand hinsichtlich einer möglichst genauen winkelmäßigen Positonierung dieser Markierungen getrieben worden ist. Dennoch läßt sich die jeweilige Winkelgeschwindigkeit der Relativdrehung und damit des rotierenden Körpers außerordentlich genau dadurch bestimmen, daß der zeitliche Abstand von zwei vom Meßfühler erzeugten elektrischen Signalen gemessen wird, die zu zwei identifizierten Markierungen gehören. Weiß man nämlich, welchen Markierungen die betreffenden elektrischen Signale zugeordnet sind, so hängt die Genauigkeit der Winkelgeschwindigkeitsmessung nur noch von der Genauigkeit der momentan durchgeführten Zeitmessung und der Genauigkeit ab, mit der der Winkelabstand dieser beiden Markierungen bekannt ist. Da Zeitabstände zwischen zwei aufeinanderfolgenden

2

elektrischen Signalen ohne hohen technischen und kostenmäßigen Aufwand beispeilsweise mit Hilfe einer quarzgesteuerten Oszillatorschaltung elektronisch sehr genau gemessen werden können und gemäß einem Merkmal der Erfindung der Absolutwert des Winkelabstandes der beiden betrachteten Markierung zuvor in einem Eichlauf ebenfalls durch eine entsprechend genaue Zeitmessung bestimmt und in Form eines Eichwertes gespeichert worden ist, erhält man durch einen einfachen rechnerischen Vergleich des gespeicherten Eichwertes mit dem momentan gemessenen Zeitabstand die momentane Winkelgeschwindigkeit mit der Genauigkeit der verwendeten Zeitmessung.

Wurde beim Eichlauf beispielsweise die Winkelgeschwindigkeit $\omega_E$ und der Zeitabstand $\Delta T_E$ zwischen den zu zwei identifizierten, d. h. also als solche wieder-erkennbaren Markierungen gehörenden elektrischen Signalen gemessen und ergibt sich zum Zeitpunkt t ein Zeitabstand $\Delta T(t)$ zwischen denselben Markierungen zugeordneten elektrischen Signalen, so gilt

$$\omega(t) = [\Delta T_E/\Delta T(t)] \, \omega_E.$$

Zur Bestimmung der momentanen Winkelgeschwindigkeit $\omega(t)$ aus den gespeicherten Eichwerten und dem momentanen Meßwert $\Delta T(t)$ ist also nur eine einfache Rechenoperation erforderlich, die sich auf elektronischem Wege ohne weiteres und mit geringem apparativem Aufwand durchführen läßt.

Die Genauigkeit, mit der die Winkelabstände verschiedenster Markierung auf dem Markierungsträger miteinander übereinstimmen, geht in die Messung nicht mit ein, so daß bei dem erfindungsgemäßen Verfahren Markierungsträger verwendet werden können, die ohne großen Aufwand und damit äußerst kostengünstig hergestellt worden sind.

Um die bei den Meßläufen jeweils momentan gemessenen Zeitabstände den richtigen Eichwerten zuordnen zu können, ist es erforderlich, die zu den vom Meßfühler abgegebenen Signalen gehörenden Markierungen zu identifizieren. Bevorzugterweise erfolgt diese Identifizierung mit Hilfe von in der durch die Markierungen auf dem Markierungsträger gebildeten Skala vorhandenen Asymmetrien.

Beim erfindungsgemäßen Verfahren ergeben sich diese Asymmetrien im allgemeinsten Fall dadurch ganz von selbst, daß es mit Hilfe eines entsprechend genauen Zeitmeßverfahrens immer möglich ist, die Winkelabstände zwischen den Markierungen, insbesondere zwischen den jeweils unmittelbar aufeinanderfolgenden Markierungen mit einer solchen Genauigkeit zu bestimmen, daß es selbst dann auf der ganzen Skala keine zwei für eine gegebenene Winkelgeschwindigkeit miteinander übereinstimmende Meßwerte gibt, wenn der Markierungsträger mit weit höherer Präzision hinsichtlich der Positionierung der einzelnen Markierungen hergestellt wird, als dies im Rahmen des erfindungsgemäßen Verfahrens angestrebt und erforderlich ist. Somit dienen also vorzugsweise die einander nicht exakt gleichen Winkelabstände der auf dem Markierungsträger in Drehrichtung unmittelbar aufeinanderfolgenden Markierungen als die Asymmetrien, die zur Identifizierung der einzelnen Markierungen herangezogen werden.

Es ist somit möglich, jede der Markierungen mit Hilfe ihres Winkelabstandes von der unmittelbar vorausgehenden und/oder von der unmittelbar nachfolgenden Markierung oder aber auch mit Hilfe der Winkelabstände von zwei oder mehr vorausgehenden Markierungen als Individuum zu erkennen, wenn erst einmal sämtliche Winkelabstände aller jeweils in Drehrichtung unmittelbar aufeinanderfolgender Markierungen ausgemessen und gespeichert sind.

Soll zum Beispiel beim Vorbeilaufen der n-ten Markierung am Meßfühler eine bestimmte Funktion ausgelöst werden, so kann diese Auslösung dann erfolgen, wenn das erste Meßfühlersignal auftritt, nachdem das Wiedererscheinen des bekannten und auf dem Markierungsträger nur ein einziges Mal vorhandenen Winkelabstandes zwischen der (n-1)-ten und der (n-2)-ten Markierung erkannt worden ist.

Da bei dem erfindungsgemäßen Verfahren der Winkelabstand zweier Markierungen über den Zeitabstand der zugehörigen Meßfühlersignale gemessen wird und in diese Messung die momentane Winkelgeschwindigkeit eingeht, ist es zweckmäßig, zur Identifizierung der n-ten Markierung den Quotienten beispielsweise der die Winkelabstände der (n-1)-ten zur (n-2)-ten und der (n-2)-ten zur (n-3)-ten Markierung kennzeichnenden Zeitabstände heranzuziehen, da bei dieser Quotientenbildung die momentane Winkelgeschwindigkiet herausfällt, wenn während des sich aus diesen beiden unmittelbar aufeinanderfolgenden Zeitabständen zusammensetzenden Zeitraums die Dreh- bzw. Winkelgeschwindigkeit konstant ist ; wegen der Kürze dieses Zeitraums wird diese Bedingung im allgemeinen erfüllt sein. Auch ist die Wahrscheinlichkeit, daß sich auf einem Markierungsträger verschiedene Markierungsgruppen befinden, für die die in der eben beschriebenen Weise gebildeten Quotienten im Rahmen der verwendeten sehr genauen Zeitmessung einander gleiche Werte besitzen, nochmals wesentlich ·kleiner als die Wahrscheinlichkeit für das zufällige Auftreten von zwei einander genau gleichen Winkelabständen zwischen aufeinanderfolgenden Markierungen.

Erfindungsgemäß ist es nicht erforderlich, alle Markierungen einzeln in der eben beschriebenen Weise zu identifizieren. Es ist vorteilhaft, stattdessen mit Hilfe der vorhandenen Asymmetrien nur einige, vorzugsweise nur eine einzige Markierung zu identifizieren, die dann als Null-Markierung bei der durch Abzählen der zugehörigen Meßfühlersignale erfolgenden Identifizierung der übrigen Markierungen dient.

Es sei ausdrücklich darauf hingewiesen, daß es im allgemeinsten Fall nicht erforderlich ist, diese Null-Markierung bei der Herstellung des Markierungsträgers von vornherein und endgültig als solche festzulegen. Vielmehr kann jede der auf dem Markierungsträger vorhandenen Markierungen während des

0 039 900

Betriebs einer nach dem erfindungsgemäßen Verfahren arbeitenden Meßvorrichtung willkürlich herausgegriffen und für einen folgenden Zeitraum als Null-Markierung verwendet werden.

Das Herausgreifen irgendeiner Markierung als Null-Markierung kann zum Beispiel mit Hilfe der Vorschrift geschehen, daß der zum periodischen, d. h. mit jeder Umdrehung wieder von vorn beginnenden Abzählen der Markierungen dienende Zähler durch diejenige Markierung immer wieder auf Null zurückgesetzt werden soll, die auf den kleinsten oder auf den größten auf dem Markierungsträger vorhandenen Winkelabstand zwischen zwei einander unmittelbar benachbarten Markierungen folgt. Da aber, wie oben ausgeführt, zur Eliminierung der Drehgeschwindigkeitsabhängigkeit bevorzugt nicht die Zeitabstände unmittelbar aufeinanderfolgender Markierungen sondern die Quotienten von Zeitabständen zweier solcher Markierungspaare miteinander verglichen werden, hat die eben genannte Vorschrift den Nachteil, daß als Nenner sämtlicher während einer Umdrehung zu bildender Quotienten der Zeitabstand ein und desselben Markierungspaares verwendet werden muß, während die Zähler von den Zeitabständen der Reihe nach überstrichenen Markierungspaare gebildet werden. Das würde aber bedeuten, daß die so definierte Null-Markierung nur dann gefunden werden kann, wenn die Drehgeschwindigkeit wenigstens während einer ganzen Umdrehung konstant bleibt. Bevorzugt wird daher die Null-Markierung zum Beispiel dadurch definiert, daß sie die letzte von den drei unmittelbar aufeinanderfolgenden Markierungen sein soll, deren beide Zeitabstände den kleinsten oder alternativ den größten Quotienten ergeben.

Zur Vereinfachung ist es jedoch auch möglich, anstelle von oder zusätzlich zu den in der auf dem Markierungsträger durch die Markierungen gebildeten Skala « natürlicherweise » vorhandenen Asymmetrien « absichtlich » erzeugte Asymmetrien zur Identifizierung zumindest der Null-Markierung zu verwenden. So kann zum Beispiel vorgesehen sein, daß eine der Markierungen dadurch als Null-Markierung festgelegt wird, daß ihr Winkelabstand zu einer ihrer unmittelbaren Nachbarmarkierungen wesentlich verschieden von den Winkelabständen aller anderen einander unmittelbar benachbarten Markierungen ausgebildet wird, oder daß sie sich in ihrer Länge und/oder Breite von der Länge und/oder Breite der übrigen Markierungen wesentlich unterscheidet.

Bei den bisherigen Überlegungen war davon ausgegangen worden, daß die Winkelgeschwindigkeit $\omega_E$ beim Eichlauf bekannt ist. Die Kenntnis dieser Winkelgeschwindigkeit $\omega_E$ muß aber nicht beispielsweise dadurch von außen kommen, daß, was prinzipiell möglich ist, die Relativdrehung zwischen Markierungsträger und Abtasteinrichtung während des Eichlaufs von einem statt des rotierenden Körpers mit der erfindungsgemäßen Vorrichtung verbundenen Motor konstanter, bekannter Drehgeschwindigkeit verursacht wird. Vielmehr ist es möglich, den Wert von $\omega_E$ im Rahmen des erfindungsgemäßen Verfahrens und mit Hilfe der erfindungsgemäßen Vorrichtung während des Eichlaufs selbst zu ermitteln. Zu diesem Zeck ist gemäß der Erfindung vorgesehen, daß zwei verschieden Arten von Zeitabständen gemessen und einer weiteren Verarbeitung zugeführt werden. Bei der einen Art von Zeitabständen handelt es sich um sog. « Markierungspaarzeitabstände », d. h. um die bisher bereits mehrfach erwähnten Zeitabstände von elektrischen Signalen, die zu einem von zwei verschiedenen, auf dem Markierungsträger in Richtung der Relativdrehung hintereinander angeordneten Markierungen gebildeten Markierungspaar gehören. Die zweite Art von Zeitabständen sind dagegen sog. « Markierungseigenzeitabstände », d. h. die Zeitabstände von elektrischen Signalen, die jeweils ein und derselben Markierung auf dem Markierungsträger zugeordnet sind. Umfaßt die Abtasteinrichtung der erfindungsgemäßen Vorrichtung nur einen einzigen Meßfühler, so entsprechen die Eigenzeitabstände einer jeden Markierung genau einem Drehwinkel von 360°, so daß der Kehrwert dieser Eigenzeitabstände mit der Genauigkeit der verwendeten Zeitmessung die während des Eichlaufs herrschende Winkelgeschwindigkeit $\omega_E$-allerdings gemittelt über eine volle Umdrehung-darstellt. Damit also die während eines solchen Eichlaufs gleichzeitig gemessenen Markierungspaarzeitabstände als Eichwerte für spätere Meßläufe verwendet werden können, muß die Bedingung erfüllt sein, daß die Winkelgeschwindigkeit $\omega_E$ während des Eichlaufs konstant ist.

Bevor im folgenden erläutert wird, wie diese Konstanz der Winkelgeschwindigkeit $\omega_E$ während des Eichlaufs beim erfindungsgemäßen Verfahren sichergestellt wird, sei noch darauf hingewiesen, daß die oben erwähnten Markierungspaare zwar im Falle der Erfindung von auf dem Markierungsträger in Richtung der Relativdrehung unmittelbar aufeinanderfolgenden Markierungen gebildet sein können, daß aber bei einer alternativen Ausgestaltung des Verfahrens auch jedes der Markierungspaare als erste Markierung eine allen Markierungspaaren gemeinsame Null-Markierung und als zweite Markierung eine für dieses Paar individuelle Markierung umfassen kann. Diese eben erwähnte Null-Markierung kann mit der oben beschriebenen, den periodischen Neubeginn der Markierungszählung definierenden Null-Markierung identisch sein. In diesem Fall besteht dann das erste Markierungspaar aus der nullten und der ersten Markierung, das zweite Markierungspaar aus der nullten und der zweiten Markierung, das dritte Markierungspaar aud der nullten un der dritten Markierung usw.

Die Konstanz der Winkelgeschwindigkeit $\omega_E$ während eines Eichlaufs kann nun nach zwei verschiedenen, bevorzugten Meß-, Vergleichs- und Speicherverfahren festgestellt werden.

Bei einer Variante ist vorgesehen, daß beim Eichlauf in mehreren nacheinander beginnenden Meßreihen jeweils für mehrere, für jede Meßreihe jeweils gleiche Markierungspaare die Markierungspaarzeitabstände gemessen und zwischengespeichert werden, daß gleichzeitig für mehrere einzelne Markierungen die Markierungseigenzeitabstände gemessen und zwischengespeichert werden, daß die

4

eine Meßreihe bildenden Markierungspaarzeitabstände einzeln mit den entsprechenden Markierungspaarzeitabständen der vorausgehenden Meßreihe verglichen werden, und daß dann, wenn dieser Vergleich eine Übereinstimmung innherhalb vorgegebener Toleranzgrenzen ergibt, die Markierungspaarzeitabstände als Eichwerte längerfristig gespeichert werden, während aus den Markierungseigenzeitabständen der Mittelwert gebildet und als Maß für die zu dieser Zeit vorliegende Winkelgeschwindigkeit gespeichert und weiter verarbeitet wird.

Besitzt die hierbei zur Verwendung kommende Abtasteinrichtung nur einen einzigen Meßfühler, so sind die eben erwähnten Meßreihen identisch mit einer vollen Relativdrehung. Es werden also bei wenigstens zwei aufeinanderfolgenden vollen Umdrehungen die Markierungspaarzeitabstände von mehreren, vorzugsweise sämtlichen auf dem Markierungsträger vorhandenen und im obigen Sinn identifizierten Markierungspaaren gemessen. Die Meßwerte der ersten vollen Umdrehung werden zwischengespeichert und jeweils einzeln mit dem für das entsprechende Markierungspaar während der zweiten Umdrehung gewonnenen Markierungspaarzeitabstand vorzugsweise durch Quotientenbildung verglichen. Zeigt sich, daß die so miteinander verglichenen Meßwerte innerhalb vorgegebener Toleranzgrenzen miteinander übereinstimmen, so ist dies ein Kennzeichen dafür, daß die Winkelgeschwindigkeit $\omega_E$ zumindest während dieser beiden Umdrehungen innerhalb der vorgegebenen Toleranzgrenzen konstant war und daß entweder die Markierungspaarzeitabstände selbst oder aus ihnen abgeleitete, die Absolutwerte der Winkelabstände von auf dem Markierungsträger unmittelbar aufeinanderfolgenden Markierungen charakterisierende Zeitwerte als Eichwerte längerfristig abgespeichert werden können. Aus den während dieser beiden Umdrehungen gleichzeitig gemessenen und zwischengespeicherten Markierungseigenzeitabständen mehrerer, vorzugzweise aller auf dem Markierungsträger vorhandener Markierungen wird der Mittelwert gebildet, dessen Reziprokwert als Maß für die während des Eichlaufs herrschende und auf Konstanz überprüfte Winkelgeschwindigkeit $\omega_E$ längerfristig gespeichert wird.

Umfaßt die zur Verwendung kommende Abtasteinrichtung zwei beispielsweise einander bezüglich der Drehachse der Relativdrehung diametral gegenüberliegende Meßfühler, so läuft das eben beschriebene Eichverfahren mit dem Unterschied in entsprechender Weise ab, daß die wenigstens zwei zu bildenden Meßreihen nicht jeweils einer Voll-, sondern nur einer Halbdrehung entsprechen und die Markierungseigenzeitabstände zwischen den elektrischen Signalen gemessen werden, die ein und dieselbe Markierung zuerst an dem einen und dann an dem anderen der beiden Meßfühler erzeugt. Der Vorteil dieser Anordnung liegt darin, daß die Konstanz der Winkelgeschwindigkeit $\omega_E$ nur für einen wesentlich kürzeren Zeitraum vorliegen muß, damit ein Eichlauf durchgeführt werden kann. Damit es bei der Messung der Eigenzeitabstände nicht zu Fehlern kommt, muß zwar der Winkelabstand zwischen den beiden Meßfühlern sehr genau bekannt sein, doch ist es mit Hilfe der erfindungsgemäßen Anordnung stets möglich, diesen Winkelabstand ständig nachzumessen, so daß auch hier an die Langzeitkonstanz keine besonderen Anforderungen gestellt werden müssen.

Alternativ hierzu ist es allerdings auch möglich, zwar die Markierungspaarzeitabstände mit Hilfe von zwei Meßfühlern zu erfassen und die beiden so während einer Umdrehung entstandenen Meßreihen miteinander zu vergleichen, die Markierungseigenzeitabstände aber nur anhand der an einem Meßfühler auftretenden, jeweils von derselben Markierung stammenden elektrischen Signale zu messen.

Bei einem anderen, bevorzugten Meßverfahren, das ebenfalls mit einem, zwei oder mehr Meßfühlern durchgeführt werden kann, werden die Markierungseigenzeitabstände für mehrere einzelne Markierungen gemessen, zwischengespeichert und miteinander verglichen, werden weiterhin gleichzeitig die Markierungspaarzeitabstände für mehrere Markierungspaare gemessen und zwischengespeichert und werden dann, wenn der Vergleich der Markierungseigenzeitabstände eine Übereinstimmung innerhalb von gegebenen Toleranzgrenzen ergibt, die Markierungspaarzeitabstände als Eichwerte längerfristig gespeichert, während aus den Markierungseigenzeitabständen der Mittelwert gebildet und als Maß für die zu dieser Zeit vorliegende Winkelgeschwindigkeit gespeichert und weiterverarbeitet wird. Der wesentlichste Unterschied zu dem zuvor geschilderten Verfahren besteht hier also darin, daß nicht die Markierungspaarzeitabstände, sondern die Markierungseigenzeitabstände zur Überprüfung der Konstanz der Winkelgeschwindigkeit $\omega_E$ herangezogen werden.

Aus der obigen Schilderung der im Rahmen des erfindungsgemäßen Verfahrens liegenden, verschiedenen Möglichkeiten zur Durchführung des Eichlaufs ergibt sich, daß die Winkelgeschwindigkeit der Relativdrehung zwischen Markierungsträger und Abtasteinrichtung zwar für einen gewissen Zeitraum konstant sein muß, dabei aber einen beliebigen Wert haben kann, da dieser Wert ja während des Eichlaufs ebenfalls aus den gewonnenen Meßwerten ermittelt wird.

Es ist daher, wie bereits erwähnt, zwar prinzipiell möglich, die erfindungsgemäße Vorrichtung dadurch zu eichen, daß man sie zunächst nicht mit dem zu überwachenden Körper, sondern mit einem Motor mit konstanter Drehzahl verbindet und so den Eichlauf durchführt. Dies hat aber den Nachteil, daß an die Langzeitkonstanz der gesamten Vorrichtung und insbesondere des Markierungsträgers hohe Anforderungen gestellt werden bzw. immer wieder relativ arbeitsaufwendige Nacheichungen durchgeführt werden müssen, was zu einer Erhöhung der Herstellungs- bzw. Betriebskosten beiträgt.

Daher ist gemäß einer besonders bevorzugten Variante des erfindungsgemäßen Verfahrens vorgesehen, daß beim Eichlauf die Relativdrehung zwischen Markierungsträger und Abtasteinrichtung aufgrund der Drehung des rotierenden Körpers erfolgt. Die erfindungsgemäße Vorrichtung kann also ungeeicht an dem rotierenden Körper, dessen Winkelgeschwindigkeit fortlaufend gemessen und überwacht werden

5

soll, angebracht werden und es wird dann dieser rotierende Körper in seine betriebsmäßige Rotation versetzt. Da zur Durchführung einer vollständigen Eichung, wie oben geschildert, je nach Ausführungsform der Abtasteinrichtung nicht mehr als zwei und u.U. sogar nur eine oder, bei noch mehr Meßfühlern auch weniger als eine Umdrehung erforderlich sind, kann in jedem Fall davon ausgegangen werden, daß der rotierende Körper bereits kurz nach Beginn seines Betriebs irgendwann einmal für einen derartig kurzen Zeitraum eine konstante Winkelgeschwindigkeit besitzt. Die erfindungsgemäße Vorrichtung arbeitet bereits während des gesamten Anlaufzeitraums und überprüft fortlaufend, ob zueinander gehörende Zeitabstände innerhalb der vorgegebenen Toleranzgrenzen miteinander übereinstimmen. Sobald der rotierende Körper, wenn auch vielleicht nur kurzzeitig, eine konstante Winkelgeschwindigkeit besitzt, erkennt die erfindungsgemäße Vorrichtung diese Konstanz und verwertet die während dieses Zeitraums gewonnenen Meßwerte zur Ermittlung und längerfristigen Abspeicherung von Eichwerten, die dann während der nachfolgenden Meßläufe zur sehr genauen Messung und Berechnung der momentanen Winkelgeschwindigkeit des rotierenden Körpers herangezogen werden können.

An die Langzeitkonstanz der gesamten Anordnung einschließlich des Markierungsträgers müssen dabei keinerlei Anforderungen mehr gestellt werden, da erfindungsgemäß vorgesehen ist, daß der Eichlauf zur ständigen Nacheichung wiederholt wird. Da bei einem Eichlauf auch ständig Meßwerte über die momentane Winkelgeschwindigkeit des rotierenden Körpers anfallen, ist gemäß einer besonders bevorzugten Variante des erfindungsgemäßen Verfahrens vorgesehen, daß bei jedem Meßlauf Markierungspaarzeitabstände und Markierungseigenzeitabstände gemessen und miteinander verglichen werden und daß immer dann, wenn der Vergleich eine Übereinstimmung innerhalb der vorgegebenen Toleranzgrenzen ergibt, der Meßlauf als neuer Eichlauf gewertet wird. Bei dieser Variante wird also die scharfe Trennung zwischen Eichlauf und Meßlauf aufgehoben. Vielmehr werden, was aufgrund der Schnelligkeit der elektronischen Meß- und Auswerteschaltung keinerlei Problem darstellt, fortlaufend alle für eine ständige Nacheichung der erfindungsgemäßen Vorrichtung erforderlich Meßwerte gewonnen und in entsprechender Weise weiterverarbeitet. Ändert sich die Winkelgeschwindigkeit des rotierenden Körpers während eines beliebig herausgegriffenen Zeitraums, so erkennt die erfindungsgemäße Vorrichtung dies und zeigt nur die momentan gemessene Winkelgeschwindigkeit an, ohne an den abgespeicherten Eichwerten etwas zu ändern. Sobald sich aber wieder eine neue konstante Winkelgeschwindigkeit des rotierenden Körpers eingestellt hat, wird auch dies von der erfindungsgemäßen Vorrichtung erkannt und sofort wieder eine Nacheidung durchgeführt. Da, wie bereits erwähnt, ein solcher Eichlauf nur eine sehr kurze Zeit in Anspruch nimmt, kann davon ausgegangen werden, daß nahezu bei allen in der Praxis auftretenden Anwendungsfällen die Zeiträume, in denen die Winkelgeschwindigkeit des rotierenden Körpers die für die Durchführung eines Eichlaufes erforderliche Konstanz besitzt, wesentlich häufiger und länger sind als die Zeiträume, in denen sich die Winkelgeschwindigkeit ändert. Dadurch muß bei der erfindungsgemäßen Vorrichtung lediglich die Zeitmeßeinrichtung eine gute Langzeitkonstanz besitzen, was mit bekannten Mitteln und ohne großen Aufwand erreichbar ist. Alle anderen Teile der erfindungsgemäßen Anordnung können mittel- und längerfristig Drifterscheinungen aufweisen, die mit Hilfe des erfindungsgemäßen Verfahrens immer wieder herausgeeicht werden.

Wie bereits mehrfach erwähnt, können beim erfindungsgemäßen Verfahren Abtasteinrichtungen mit einem, zwei oder mehr Meßfühlern verwendet werden. Bei einer bevorzugten Variante ist vorgesehen, daß die Abtasteinrichtung zwei bezüglich der Drehachse der Relativdrehung voneinander winkelmäßig beabstandete Meßfühler umfaßt, die vorzugsweise einander diametral gegenüberliegen. Durch eine solche Anordnung wird es möglich, Präzessionsbewegungen der Drehachse der Relativdrehung innerhalb einer Umdrehung zu erkennen, da eine solche Bewegung periodisch an dem einen der beiden Meßfühler scheinbar vergrößerte und an dem anderen Meßfühler um den gleichen Betrag scheinbar verringerte Winkelgeschwindigkeitsmeßwerte liefert. Die Meß- und Auswerteschaltung wird in einem solchen Fall vorteilhafterweise so modifiziert, daß sie an beiden Meßfühlern gleichzeitig Markierungspaarzeitabstände mißt und diese nicht nur mit den zugehörigen gespeicherten Eichwerten vergleicht, sondern auch noch daraufhin untersucht, ob die Abweichungen von den betreffenden Eichwerten entgegengesetztes Vorzeichen aufweisen und dem Absolutbetrag nach gleich groß sind. Ist letzteres der Fall, so kann auch noch die tatsächliche, von dem durch die Präzessionsbewegung verursachten Fehler befreite Winkelgeschwindigkeit ermittelt und angezeigt werden. Erfindungsgemäß ist es möglich, Präzessionsbewegungen auch dann zu erkennen, wenn die Abtastvorrichtung nur einen einzigen Meßfühler umfaßt. Allerdings sind hierfür dann mehrere Umdrehungen erforderlich und die Meß- und Auswertevorrichtung muß die für die einzelnen identifizierten Markierungspaare gewonnenen Zeitabstandsmeßwerte über einen entsprechend langen Zeitraum hinweg speichern und miteinander vergleichen.

Mit Hilfe des erfindungsgemäßen Verfahrens lassen sich mit einem Meßfühler auch dann sehr genaue und hoch aufgelöste Winkelgeschwindigkeitsmessungen durchführen, wenn entweder der rotierende Körper selbst oder aber auch die erfindungsgemäße Meßanordnung einen « Schlag » aufweist, d. h. also exzentrisch läuft. Durch die ständige Nach- bzw. Neueichung des Systems werden die Auswirkungen eines solchen exzentrischen Laufes eliminiert ; durch einen längerfristigen Vergleich kann darüberhinaus auch das Ausmaß des Fehlers messend erfaßt werden, woraus sich eine Anzeige für eventuell auftretende kristische Situationen gewinnen läßt, so daß eine rechtzeitige Warnung gegeben werden kann, bevor die Exzentrizität so stark ist, daß es zu einer Beschädigung oder gar Zerstörung der rotierenden Anordnung kommt.

Wie bereits erwähnt, werden bei einer bevorzugten Variante des erfindungsgemäßen Verfahrens die Markierungspaarzeitabstände sämtlicher auf dem Markierungsträger vorhandener Markierungspaare gemessen, gespeichert und ausgewertet. Es ist vorteilhaft, diese Messungen so vorzunehmen, daß der zeitliche Endpunkt einer jeden Einzelmessung mit dem zeitlichen Anfangspunkt der unmittelbar folgenden Einzelmessung identisch ist. Dann müssen nämlich die Markierungseigenzeitabstände nicht mehr gesondert gemessen werden ; es ist vielmehr möglich, sie dadurch zu ermitteln, daß man die Markierungspaarzeitabstände sämtlicher von jeweils einander unmittelbar benachbarten Markierungen gebildeten Markierungspaaren aufsummiert. Da die zeitlichen Anfangs- und Endpunkte der hierbei verwendeten Einzelmessungen jeweils immer exakt zusammenfallen, addieren sich die Fehler der Einzelmessungen nicht und es wird für den Markierungseigenzeitabstand ein Wert erhalten, der lediglich mit einem der Genauigkeit einer einzelnen Markierungspaarzeitabstandsmessung entsprechenden Fehler behaftet ist.

Darüber hinaus ergibt sich hier eine Möglichkeit, das einwandfreie Arbeiten der Meß- und Auswerteschaltung dadurch zu überprüfen, daß man die Markierungseigenzeitabstände gesondert mißt und diese Meßergebnisse mit der Summe der zugehörigen Markierungspaarzeitabstände vergleicht. Bei einwandfrei arbeitender Vorrichtung müssen sich hier übereinstimmende Werte ergeben.

Das exakte Zusammenfallen von End- und Anfangspunkt unmittelbar aufeinanderfolgender Messungen von Markierungspaarzeitabständen kann vorteilhafterweise dadurch erreicht werden, daß für die Markierungseigenzeitabstandsmessung einer beliebig herausgegriffenen Markierung durch das dieser Markierung zugeordnete Meßfühlersignal eine stetig weiterlaufende Zeitmessung ausgelöst wird und daß bei jedem folgenden Meßfühlersignal der gerade erreichte Zeitmeßwert ohne Unterbrechung der laufenden Zeitmessung erfaßt und weiter verarbeitet wird.

Die Aufsummierung der Zeitabstände der von unmittelbar aufeinanderfolgender Messungen von Markierungspaarzeitabständen kann vorteilhafterweise dadurch erreicht werden, daß für die Markierungseigenzeitabstandsmessung einer beliebig herausgegriffenen Markierung durch das dieser Markierung zugeordnete Meßfühlersignal eine stetig weiterlaufende Zeitmessung ausgelöst wird und daß bei jedem folgenden Meßfühlersignal der gerade erreichte Zeitmeßwert ohne Unterbrechung der laufenden Zeitmessung erfaßt und weiter verarbeitet wird.

Die Aufsummierung der Zeitabstände der von unmittelbar aufeinanderfolgenden Markierungen gebildeten Markierungspaare erfolgt hier also nicht rechnerisch sondern durch die Messung selbst und die Ermittelung der Markierungspaarzeitabstände erfolgt durch Subtraktion jeweils unmittelbar nacheinander gewonnener Zeitmeßwerte.

Eine besonders bevorzugte Ausführungsvariante ist dadurch gekennzeichnet, daß die Messung eines Zeitabstandes zwischen jeweils zwei Meßfühlersignalen durch das Abzählen der zwischen diesen Meßfühlersignalen auftretenden Schwingungsperioden eines freilaufenden, vorzugsweise quarzgesteuerten Oszillators erfolgt.

Damit nun bei hohen Drehgeschwindigkeiten und einer großen Anzahl von Markierungen zur Erzielung der erforderlichen Genauigkeit nicht ein mit extrem hoher Frequenz schwingender Oszillator verwendet werden muß, ist vorzugsweise vorgesehen, daß die zeitliche Lage eines Meßfühlersignals innerhalb der jeweiligen Schwingungsperiode des Oszillators mit Hilfe einer Zeit-Amplituden-Wandlerschaltung gemessen wird, die nach Triggerung durch ein Start-Signal ein in seiner Amplitude mit der Zeit stetig und monoton anwachsendes und somit ein Maß für die seit dem Start-Signal verstrichene Zeit bildendes Ausgangssignal liefert. Damit kann die bei einer reinen Abzählung der Oszillatorschwingungen nicht unterteilbare kleinste Zeiteinheit einer ganzen bzw. halben Oszillatorperiode weiter aufgelöst werden, was vor allem in den Fällen, in denen zwischen zwei aufeinanderfolgenden Meßfühlersignalen nur einige wenige Perioden des freischwingenden Oszillators auftreten, zu einer erheblichen Steigerung der Meßgenauigkeit führt.

Es ist besonders günstig, daß zur Messung des Zeitabstandes zwischen zwei Meßfühersignalen die Zeit-Amplituden-Wandlerschaltung durch das frühere dieser beiden Meßfühlersignale gestartet, durch einen hierauf folgenden Nulldurchgang des Oszillatorschwingung angehalten und nach Speicherung der so gewonnenen Ausgangssignalamplitude als erster Zeit-Feinmeßwert zurückgesetzt wird, daß die Zeit-Amplituden-Wandlerschaltung durch das spätere Meßfühlersignal wieder gestartet, durch einen hierauf folgenden Nulldurchgang der Oszillatorschwingung angehalten und nach Speicherung der so gewonnen Ausgangssignalamplitude als zweiter Zeit-Feinmeßwert zurückgesetzt wird, das zur Gewinnung eines Zeit-Grobmeßwertes die Anzahl der zwischend en beiden Nulldurchgängen erfolgten Oszillatorschwingungen mit dem Kehrwert der Oszillatorfrequenz multipliziert wird und daß zur Ermittelung des Zeitabstandes der Meßfühlersignale der erste Zeit-Feinmeßwert zum Zeit-Grobmeßwert addiert und von der Summe der zweite Zeit-Feinmeßwert subtrahiert werden. Werden die zwischen zwei Meßfühlersignalen liegenden Oszillatorperioden durch Abzählung der in diesem Zeitraum auftretenden Oszillator-Halbperioden erfaßt, so ist vorzugsweise vorgesehen, daß zum Anhalten der Zeit-Amplituden-Wandlerschaltung der erste nach dem Meßfühlersignal auftretende Nulldurchgang des Oszillatorschwingung Verwendung findet.

Werden dagegen nur ganze Oszillatorperioden abgezählt, so ist vorgesehen, daß zum Anhalten der Zeit-Amplituden-Wandlerschaltung der erste nach dem Meßfühlersignal auftretende, in vorgegebener Richtung erfolgende Nulldurchgang der Oszillatorschwingung Verwendung findet.

Zur Bestimmung eines einzelnen Markeirungspaarzeitabstandes werden bei diesem Verfahren also drei Zeitmessungen durchgeführt und deren Ergebnisse vorzeichenrichtig miteinander kombiniert. Bei der oben beschriebenen fortlaufenden von einer definierten Markierung ausgehenden Zeitmessung wird lediglich die zur Bestimmung des Zeit-Grobmeßwertes benötigte Zahl der zwischen zwei Meßfühlersignalen aufgetretenen Oszillatorperioden nicht unmittelbar gemessen, sondern durch Subtraktion der beiden zu den oben erwähnten Nulldurchgängen gehöherenden Zählwerte ermittelt.

Da die üblichen Zeit-Amplituden-Wandlerschaltungen über längere Zeiten hinweg Drifterscheinungen aufweisen können, wobei sich die jeweils innerhalb bestimmter Zeitspannen nach dem Start-Signal erreichte Ausgangsamplitude ändert, ist gemäß einer besonders bevorzugten Variante des erfindungsgemäßen Verfahrens vorgesehen, daß die Zeit-Amplituden-Wandlerschaltung zwischen den Zeitabstandsmessungen immer wieder dadurch nachgeeicht wird, daß sie durch einen Nulldurchgang der Oszillatorschwingung gestartet und durch einen nachfolgenden Nulldurchgang der Oszillatorschwingung angehalten wird und daß der so erhaltene Zeitmeßwert der Zeit-Amplituden-Wandlerschaltung mit dem zwischen diesen beiden Nulldurchgängen der Oszillatorschwingungen liegenden Zeitraum verglichen wird.

Es wurde oben bereits ausgeführt, daß die Genauigkeit und Langzeitkonstanz des erfindungsgemäßen Winkelgeschwindigkeits-Meßverfahrens nur von der Genauigkeit und der Langzeitkonstanz des zur Ausmessung der interessierenden Winkelabstände verwendeten Zeitmeßverfahrens abhängt. Dadurch, daß nun auch bei der kombinierten, die Schwingungsperioden des quarzgesteuerten Oszillators zeitlich auflösenden Zeitmessung die keineswegs die Langzeitkonstanz eines Quarzes besitzende Zeit-Amplituden-Wandlerschaltung mit Hilfe des Quarzes ständig nachgeeicht wird, erhält das gesamte Winkelgeschwindigkeitsmeßverfahren dieselbe Genauigkeit und Langzeitkonstanz wie der Quarz, ohne daß an die übrigen Teile der erfindungsgemäßen Vorrichtung in dieser Hinsicht irgendwelche besonderen Forderungen gestellt werden müßten. Da auch über sehr lange Zeiten hinweg sehr genau schwingende Quarze kostengünstig zur Verfügung stehen, liefert das erfindungsgemäße Verfahren einen außerordentlich preiswerten und dennoch extrem genau arbeitenden Winkelgeschwindigkeitsmesser.

Handelsübliche Zeit-Amplituden-Wandlerschaltungen weisen überdies die Eigenschaft auf, daß die Amplitude ihres Ausgangssignals erst nach einer gewissen Anlaufzeit nach jedem Startsignal linear mit der Zeit anwächst, während unmittelbar nach dem Startsignal eine mehr oder weniger starke Nichtlinearität vorhanden ist. Da der freilaufende Oszillator mit den Meßfühlersignalen in keiner Weise synchronisiert ist, ist es ohne weiteres möglich, daß zwischen dem die Zeit-Amplituden-Wandlerschaltung startenden Meßfühlersignal und dem nächsten, zum Anhalten verwendeten Nulldurchgang der Oszillatorschwingung ein so kurzer Zeitraum liegt, daß die Zeit-Amplituden-Wandlerschaltung im nichtlinearen Bereich arbeitet, was zu einer Verfälschung das so gewonnenen Zeit-Feinmeßwertes führen kann.

Um hier zu noch besser reproduzierbaren und genaueren Ergebnissen zu gelangen, sieht die Erfindung vor, daß das Anhalten der Zeit-Amplituden-Wandlerschaltung durch den entsprechenden Nulldurchgang der Oszillatorschwingung bei jeder Zeitabstandsmessung und bei jeder Eichmessung mit einer vorbestimmten zeitlichen Verzögerung erfolgt und daß die Zeit-Amplituden-Wandlerschaltung nach jeder dieser Messungen durch ein schaltungsintern erzeugtes Startsignal gestartet und durch ein gleichzeitig mit diesem Startsignal erzeugtes, ebenfalls der vorbestimmten zeitlichen Verzögerung unterworfenes Stoppsignal wieder angehalten wird und daß der so gewonnene Korrekturwert von dem vorausgehend gewonnenen Zeitmeßwert subtrahiert wird.

Durch diese Maßnahmen wird also zunächst die Zeitspanne, während derer die Zeit-Amplituden-Wandlerschaltung bei jeder Zeit-Feinmessung und auch bei jeder Eichmessung arbeitet, um einen vorgegebenen Zeitraum verlängert, der so gewählt ist, daß er mit Sicherheit größer ist als der Zeitraum, während dessen die Amplitude des Ausgangssignals der Zeit-Amplituden-Wandlerschaltung in nichtlinearer Weise anwächst. Sofort nachdem der so gewonnene Meßwert zwischengespeichert ist, wird die Zeit-Amplituden-Wandlerschaltung auf den Ausgangszustand zurückgesetzt und dann durch ein intern erzeugtes Startsignal neu gestartet. Gleichzeitig mit diesem Startsignal wird auch ein Stoppsignal intern erzeugt und der Zeit-Amplituden-Wandlerschaltung auf dem gleichen Weg zugeführt, auf dem sie bei den eigentlichen Zeitmessungen das vom Nulldurchgang der Oszillatorschwingung herrührende Stoppsignal erhält.

Dieses gleichzeitig mit dem intern erzeugten Startsignal erzeugte Stoppsignal erfährt also auch die oben erwähnte Verzögerung, so daß die Zeit-Amplituden-Wandlerschaltung trotz der gleichzeitigen Erzeugung der beiden Signale für einen Zeitraum arbeitet, der dieser Verzögerung (und eventuell zwischen Start- und Stoppleitung vorhandenen Laufzeitunterschieden, die bei der eigentlichen Zeitmessung in gleicher Weise vorhanden sind) entspricht. Es wird somit ein Korrekturwert erzeugt, mit dessen Hilfe exakt die in der gerade vorausgegangenen Zeitmessung enthaltenen Laufzeitdifferenzen und Nichtlinearitäten erfaßt werden. Dieser Korrekturwert wird von dem noch zwischengespeicherten Zeit-Feinmeßwert oder Eich-Meßwert abgezogen. Die Differenz stellt einen Meßwert dar, wie man ihn mit einer ideal linear arbeitenden und ohne Laufzeitdifferenzen angesteuerten Zeit-Amplituden-Wandlerschaltung erhalten würde und ist somit für eine weitere Verarbeitung optimal geeignet. Da die Korrekturwerte immer sofort unmittelbar nach der zu korrigierenden Messung gewonnen werden, wird auch der Einfluß von an dieser Stelle eventuell auftretenden Langzeitdriften eliminiert.

8

Vorzugsweise findet ein Oszillator mit rechteckförmigem Ausgangssignal Verwendung, wobei an die Stelle der Nulldurchgänge der Oszillatorschwingung die Durchgänge der Impulsflanken durch einen vorgegebenen Spannungspegel treten.

Weiterhin ist gemäß einer besonders bevorzugten Ausführungsform vorgesehen, daß durch jeden Meßfühler der Abtasteinrichtung aus den auf dem Markierungsträger angebrachten realen Markierungen ideale Marken abstrahiert und deren Zeitabstände gemessen werden. Dies hat zur Folge, daß nicht nur keine besonderen Anforderungen an die Langzeit-Maßhaltigkeit des zur Herstellung des Markierungsträgers verwendeten Materials und an die Genauigkeit der winkelmäßigen Positionierung der auf dem Markierungsträger angebrachten Markierungen gestellt werden müssen, sondern daß auch die Breite und die konkrete geometrische Form dieser Markierungen sowie die Genauigkeit ihres radialen Verlaufes keine wesentliche, die Genauigkeit der Winkelgeschwindigkeitsmessung beeinflussende Rolle mehr spielen.

Dabei ist von besonderer Bedeutung, daß die Breite der realen Markierungen in Drehrichtung gesehen wesentlich größer gewählt werden kann, als dies nach dem Stand der Technik möglich war, ohne daß dadurch die Meßgenauigkeit des Verfahrens in irgendeiner Weise beeinträchtigt würde. Durch die größere Breite der Markierungen läßt sich vielmehr das Signal-Rausch-Verhältnis am Ausgang des Meßfühlers erheblich verbessern, wodurch einerseits der zur Verarbeitung der Nutzsignale erforderliche schaltungstechnische Aufwand wesentlich verringerbar ist und zum anderen die Meßgenauigkeit noch weiter gesteigert werden kann.

Vorteilhafterweise erfolgt die Abstrahierung der idealen Marken aus den realen Markierungen dadurch, daß der Durchgang eines aus dem vom Meßfühler beim Vorbeilaufen einer Markierung abgegebenen Signal abgeleiteten elektrischen Signals durch einen vorgegebenen konstanten Spannungspegel als ideale Marke dient, wobei bevorzugt als Meßfühler jeweils ein Differential-Fotoempfänger mit wenigstens einem nachgeschalteten differenzbildenden Glied Verwendung findet und der Null-Durchgang des vom differenzbildenen Glied beim Vorbeilaufen einer Markierung am Differential-Fotoempfänger erzeugten Ausgangssignals als ideale Marke dient.

Als Differential-Fotoempfänger kann eine Differential-Fotodiode verwendet werden, deren lichtempfindliche Fläche durch einen bzw. zwei Trennstege in zwei Hälften bzw. vier Quadranten unterteilt ist.

Im ersten Fall wird die Fotodiode so angeordnet, daß ihr Trennsteg bezüglich der Achse der Relativdrehung in etwa radial verläuft. Zur Signalverarbeitung ist der Fotodiode nur ein differenzbildendes Glied, vorzugsweise ein Differenzverstärker nachgeschaltet, dessen beide Eingänge jeweils mit einer der beiden Hälften der lichtempfindlichen Fläche verbunden sind. Beim Vorbeilaufen einer jeder Markierung liefert das differenzbildende Glied jeweils ein Ausgangssignal, dessen Nulldurchgang in zumindest kurzfristig exakt reproduzierbarer Weise eine Art « optische Schwerlinie » der realen Markierung definiert und somit ausgezeichnet als ideale, zeitlich praktisch « punktförmige » Marke geeignet ist. Zwar ist es möglich, daß die so gebildeten « Markierungsschwerlinien » aufgrund von Drifterscheinungen über längere Zeiträume hinweggesehen, ihre gegenseitigen Winkelabstände geringfügig ändern. Durch die erfindungsgemäß ständig erfolgende Nacheichung bleibt dies aber ohne Bedeutung.

Im zweiten Fall ist die Fotodiode so angeordnet, daß der eine der beiden Trennstege wieder in etwa in radialer Richtung verläuft, während sich der andere etwa tangential zu der vom Meßfühler bezüglich des Markierungsträgers bei der Relativdrehung beschriebenen Bahn erstreckt. Zur Verarbeitung der bei dieser Anordnung beim Vorbeilaufen einer Markierung entstehenden vier Signale werden zwei differenzbildende Glieder verwendet, die so angeschlossen sind, daß ihre beiden Eingänge jeweils die Signale von zwei einander bezüglich des Schnittpunktes der Trennstege gegenüberliegenden Quadranten der lichtempfindlichen Fläche erhalten. Bei einer solchen Anordnung sind die von den beiden differenzbildenden Gliedern beim Vorbeilaufen einer Markierung abgegebenen Signale bzw. deren Nulldurchgänge zeitlich gegeneinander versetzt, wenn die Randlinien der Markierung nicht genau symmetrisch zu dem sich radial erstreckenden Trennsteg der Fotodiode verlaufen. Aus einer Änderung des Zeitabstandes dieser beiden jeweils zu einer Markierung gehörenden Signale kann das Ausmaß einer aufgetretenen radialen Relativverschiebung zwischen Meßfühler und Markierungsträger ermittelt und beispielsweise bei Überschreiten einer vorgegebenen Toleranzgrenze automatisch eine Nacheichung des Systems durchgeführt werden. Auch das Auftreten von Exzentrizitäten läßt sich mit dieser Anordnung erkennen.

Vorteilhafterweise ist vorgesehen, daß für jedes von dem differenzbildenden Glied beim Vorbeilaufen einer Markierung am Differential-Fotoempfänger abgegebene Ausgangssignal ein Rechtecksimpuls erzeugt wird, dessen wenigstens eine Flanke in einem festen zeitlichen Abstand zum Null-Durchgang des Ausgangssignals liegt, und daß die Zeitabstände dieser Flanken gemessen und weiter verarbeitet werden. Die von dem aus Meßfühler, differenzbildendem Glied und nachfolgender Pufferschaltung bestehenden Geber abgegebenen Rechteckimpulse können beispielsweise in ihrer Flankensteilheit und Amplitude so ausgebildet sein, daß sie zur Ansteuerung der handelsüblichen TTL-IC-Digitalbausteine geeignet sind, wodurch sich die nachfolgende Auswerteschaltung besonders kostengünstig aufbauen läßt. Erfindungsgemäß können aber auch andere diskrete oder integrierte Schaltungsbauteile zur weiteren Signalverarbeitung herangezogen werden. Wesentlich ist allein die strenge zeitliche Zuordnung eines eindeutig erfaßbaren Teils, beispielsweise der steigenden Flanke des vom Geber beim Vorbeilaufen einer Markierung am Meßfühler erzeugten Signals zu dieser Markierung, so daß tatsächlich der zeitliche

# 0 039 900

Abstand dieser Signalteile als Maß für den Winkelabstand der Markierungen verwendet werden kann.

Eine zur Lösung der der Erfindung zugrundeliegenden Aufgabe geeignete Vorrichtung ist, wie schon erwähnt, erfindungsgemäß durch die im Anspruch 25 genannten Merkmale definiert.

Auf die Funktion und Bedeutung der Bestandteile dieser Vorrichtung wurde bereits im Zusammenhang mit der Schilderung des erfindungsgemäßen Verfahrens ausführlich eingegangen. Es sei hier lediglich darauf hingewiesen, daß diese im wesentlichen von elekronischen Schaltungen gebildeten Bestandteile nicht notwendigerweise individuell nebeneinander vorhanden sein müssen, sondern schaltungsmäßig zusammengefaßt sein können. So ist es zum Beispiel möglich, die Identifizierungsschaltung, die Steuerschaltung und die Vergleichsschaltung mit der Rechenschaltung zu einem einzigen Rechner zusammenzufassen, der der Reihe nach oder parallel die entsprechenden Funktionen ausübt. Derartige Rechner stehen zum Beispiel in Form von Mikroprozessoren zu niedrigen Preisen zur Verfügung, so daß ihre Verwendung dem durch die Erfindung angestrebten Ziel, nämlich der Schaffung einer äußerst genau arbeitenden und dennoch kostengünstigen Winkelgeschwindigkeits-Meßvorrichtung bzw. Drehzahlgebers in keiner Weise entgegensteht.

Bei einer bevorzugten Ausführungsform der erfindungsgemäßen Vorrichtung umfaßt die Zeitmeßeinheit einen quarzgesteuerten Oszillator, einen die Oszillatorperioden abzählenden Zähler und eine durch die vom Impulsformer abgegebenen Signale triggerbare und durch vom Quarzoszillator abgegebene Signale anhaltbare Zeit-Amplituden-Wandlerschaltung mit nachgeschaltetem Analog/Digital-Wandler.

Da es erforderlich ist, für einen zeitlich und funktionsmäßig richtigen Ablauf der einzelnen Zeitmessungen zu sorgen, die mit Hilfe des die Oszillatorschwingungen bzw. -impulse abzählenden Zählers und der Zeit-Amplituden-Wandlerschaltung für jede Ermittlung des Zeitabstandes von zwei Meßfühler- bzw. Impulsformer-signalen die erforderlichen Grob- und Feinmeßwerte liefern, umfaßt die Zeitmeßeinheit darüber hinaus auch noch eine Ablaufsteuerung, die entweder gesondert aufgebaut oder mit in die Ablaufsteuerung des gesamten Meßsystems integriert sein kann.

Wesentlich ist, daß eine Ablaufsteuerung vorhanden ist, die die eben erwähnten Funktionen übernimmt und gegebenenfalls darüber hinaus dafür sorgt, daß zwischen den Zeitfeinmessungen die Zeit-Amplituden-Wandlerschaltung mit Hilfe des Oszillators immer wieder nachgeeicht wird, und daß sowohl nach jeder Zeitfeinmessung als auch nach jeder Eichmessung die oben bereits beschriebenen Korrekturwerte gewonnen und in der erforderlichen Weise verarbeitet werden.

Zwar ist es möglich, die von der Zeit-Amplituden-Wandlerschaltung abgegebenen analogen Meß- und Korrekturwerte jeweils für sich zu digitalisieren und erst dann weiter zu verarbeiten. Bevorzugt ist jedoch vorgesehen, daß sie mit Hilfe von Abtast- und Halte-Schaltungen zunächst in analoger Form zwischengespeichert, durch einen Differenzverstärker voneinander subtrahiert und erst dann einem Analog/Digital-Wandler zugeführt werden.

Wie bereits erwähnt, erlaubt es das erfindungsgemäße Verfahren, anstelle der auf dem Markierungsträger vorhandenen realen Markierungen aus diesen abstrahierte ideale, d. h. zeitlich praktisch punktförmige Marken zu verwenden und deren Zeitabstände auszumessen und weiterzuverarbeiten. Das hat unmittelbar zur Folge, daß es anders als beim Stand der Technik nicht mehr erforderlich ist, an die geometrische Gestalt der Markierungen besondere Anforderungen zu stellen. Insbesondere müssen die Markierungen nicht mehr in Drehrichtung so extrem schmal ausgebildet werden wie bisher ; vielmehr wird es bevorzugt, daß die Markierungen auf dem Markierungsträger im wesentlichen senkrecht zur Richtung der Relativdrehung zwischen Markierungsträger und Abtasteinrichtung verlaufende Streifen sind, wobei sich besonders gut zu verarbeitende elektrische Signale ergeben, wenn die Breite eines jeden Markierungsstreifens größer als die Breite des Trennsteges und kleiner als die Breite der Differential-Fotodiode ist. Die streifenförmige Ausbildung der Markierungen führt zu einem wesentlich verbesserten Signal-Rauschverhältnis am Meßfühlerausgang, da sich aufgrund der größeren Markierungsbreite ein wesentlich stärkerer optischer Kontrast zwischen den Markierungen und den sie umgebenden Bereichen des Markierungsträgers erzielen läßt.

Die Abtastung des Markierungsträgers durch den Meßfühler kann entweder im Auflichtverfahren oder im Durchlichtverfahren erfolgen. In jedem Fall ist dafür zu sorgen, daß das von der Lichtquelle ausgehende Meßlichtbündel möglichst senkrecht auf die Oberfläche des Markierungsträgers auffällt, was beim Auflichtverfahren zur Folge hat, daß das reflektierte Licht auf dem Weg des auffallenden Lichtes zurückläuft. Da sich Lichtquelle und Lichtempfänger nicht an derselben Stelle befinden können, wird zur Auskoppelung des reflektierten Lichtes ein Strahlenteiler, beispielsweise ein halbdurchlässiger Spiegel verwendet.

Um eine möglichst günstige Ausleuchtung des den Meßfühler bildenden Fotoempfängers zu erzielen, ist es zweckmäßig, die Lichtaustrittsöffnung der Beleuchtungsanordnung möglichst nah am Markierungsträger anzuordnen. Dies kann entweder dadurch geschehen, daß man die Lichtquelle eventuell unter Verwendung einer Abbildungs- bzw. Kondensoroptik möglichst nah am Markierungsträger anordnet. In Fällen, in denen dies beispielsweise aus Gründen des zur Verfügung stehenden Raumes nicht möglich ist, ist bevorzugt, daß ein das Licht der Lichtquelle in unmittelbare Nähe des Markierungsträgers lenkender Lichtleiter vorgesehen ist. Dieser Lichtleiter kann überdies vorteilhafterweise dazu verwendet werden, das von der Lichtquelle ausgehende Licht zu homogenisieren. Nicht nur Glühlampen, sondern auch die bevorzugt als Lichtquelle eingesetzten Licht emittierenden Dioden (LED's oder Laserdioden) besitzen nämlich ein Struktur, die dazu führt, daß das Licht nicht punktförmig sondern

10

flächig abgestrahlt wird, wobei die einzelnen Punkte dieser Fläche mit stark unterschiedlicher Helligkeit leuchten. Der zwischen Lichtquelle und Markierungsträger angeordnete Lichtleiter vermag hier eine Kondensorfunktion auszuüben, d. h. seine dem Markierungsträger zugewandte Stirnfläche erscheint als weitgehend homogen leuchtende Fläche, mit deren Hilfe die lichtempfindliche Fläche der den Meßfühler bildenden Fotodiode gleichmäßig ausgeleuchtet werden kann.

Dadurch, daß aufgrund der Erfindung keine besondere Sorgfalt beim Aufbringen der Markierungen auf den Markierungsträger aufgewendet werden muß, kann auch die Gestalt des Markierungsträgers selbst innerhalb weiter Grenzen an den jeweiligen Anwendungsfall angepaßt werden. So ist eine den bekannten Markierungsträgern vergleichbare Scheibenform ebenso möglich, wie die Verwendung von zylindrischen Markierungsträgern. Ferner können zum Beispiel dann, wenn die Winkelgeschwindigkeit bzw. die Drehzahl einer rotierenden Welle gemessen und überwacht werden soll, die Markierungen unmittelbar auf dieser Welle selbst angebracht sein. In diesem Fall sind dann rotierender Körper und Markierungsträger miteinander identisch.

Die Erfindung wird im folgenden anhand eines Ausführungsbeispiels unter Bezugnahme auf die Zeichnung beschrieben ; in dieser zeigt :

Figur 1 eine schematische Darstellung einer erfindungsgemäßen Meßvorrichtung;

Figur 2 einen vergrößerten Ausschnitt aus einem Markierungsträger,

Figur 3 eine schaltplanmäßige Darstellung der Abtasteinrichtung und eines dem Meßfühler dieser Abtasteinrichtung nachgeschalteten Gebers,

Figur 4 ein Diagramm, das die an verschiedenen Stellen dieses Gebers auftretenden elektrischen Signale wiedergibt,

Figur 5 ein schematisches Blockdiagramm einer bevorzugten Zeitmeßeinrichtung und

Figur 6 ein das Arbeiten dieser Zeitmeßeinrichtung veranschaulichendes Signal-Diagramm.

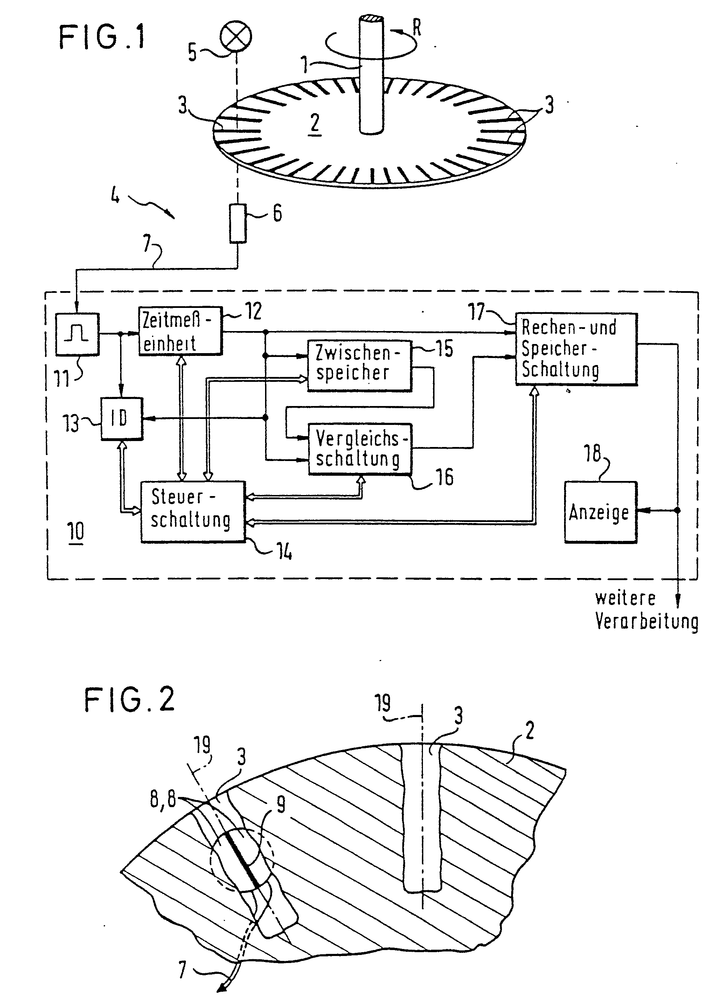

In Fig. 1 ist der rotierende Körper, dessen Winkelgeschwindigkeit bzw. Drehzahl gemessen und überwacht werden soll, eine rotierende Welle 1, an der unmittelbar ein kreisscheibenförmiger Markierungsträger 2 so befestigt ist, daß er sich mit der Welle 1 mitdreht und die gemeinsame Drehachse durch den Kreismittelpunkt verläuft. Auf der einen Flachseite der Kreisscheibe 2 ist längs des Umfangs eine Vielzahl von in Drehrichtung voneinander beabstandeten, in etwa radial verlaufenden Markierungsstreifen 3 angeordnet, die eine andere Lichtdurchlässigkeit besitzen als die sie umgebenden Bereiche des Markierungsträgers. Dabei sind an die Gleichmäßigkeit weder der Teilung der durch diese Markierungsstreifen 3 auf dem Markierungsträger 2 gebildeten Skala noch der geometrischen Form der einzelnen Markierungsstreifen besondere Anforderungen gestellt.

Zur Winkelgeschwindigkeitsmessung ist eine feststehende, das heißt die Rotation der Welle 1 nicht mitmachende Abtasteinrichtung 4 vorgesehen, die eine Lichtquelle 5 und einen Meßfühler 6 umfaßt, die auf gegenüberliegenden Seiten der Skalenscheibe 2 so angeordnet sind, daß ihre Verbindungslinie in etwa senkrecht auf der die Markierungen 3 tragenden Oberfläche der Skalenscheibe 2 steht.

Durch die in Richtung des Pfeiles R erfolgende Drehung der Welle 1 laufen also in ständigem Wechsel lichtundurchlässige Markierungen 3 und lichtdurchlässige Markierungszwischenräume durch das Meßlichtbündel hindurch, das auf diese Weise moduliert wird.

Als Lichtquelle 5 findet bevorzugt eine Licht emittierende Diode Verwendung, bei der es sich entweder um eine LED oder um eine Laserdiode handeln kann.

Der im vorliegenden Beispiel als opto-elektrischer Sensor ausgebildete Meßfühler 6 gibt über die Leitung 7 an die Meß- und Auswerteschaltung 10 jedesmal dann ein elektrisches Signal ab, wenn an ihm eine der Markierungen 3 vorbeiläuft. Der durch die Meß- und Auswerteschaltung 10 jeweils zu messende und weiterzuverarbeitende Zeitabstand dieser Signale hängt dabei sowohl vom Winkelabstand der betreffenden Markierungen 3 als auch der momentanen Winkelgeschwindigkeit bzw. Drehzahl der rotierenden Welle 1 ab.

Als mit der Leitung 7 verbundenes Eingangsglied umfaßt die Meß- und Auswerteschaltung 10 einen Impulsformer bzw. Geber 11, der nicht nur zur Formung der Meßfühlersignale sondern auch dazu dient, aus den realen, auf dem Markierungsträger 2 befindlichen Markierungen ideale, d. h. zeitlich praktisch punktförmige Marken zu gewinnen, deren Zeitabstände dann durch die dem Geber 11 nachgeschaltete Zeitmeßeinheit 12 sehr genau ausgemessen werden können.

Weiterhin umfaßt die Meß- und Auswerteschaltung 10 eine Identifizierungsschaltung 13, die erkennt, welche der Markierungen gerade am Meßfühler 6 vorbeiläuft. Diese Identifizierung kann mit Hilfe des von der Zeitmeßeinheit 12 für das unmittelbar vorausgehende Markierungspaar gemessenen Zeitabstandes bzw. des Quotienten der Zeitabstände der unmittelbar vorausgehenden Markierungspaare und/oder durch Abzählen der unmittelbar vom Geber 11 kommenden Signale erfolgen. Die Identifizierungsschaltung 13 liefert eine die jeweilige Markierung individualisierende Information an eine Steuerschaltung 14, die nach einem vorgebbaren Programm zentral die Funktionsabläufe in der gesamten Meß- und Auswerteschaltung steuert. Da ihr zur einwandfreien Durchführung dieser Steuerung auch Informationen über den jeweiligen Arbeitszustand der übrigen Schaltungsbestandteile zufließen müssen, ist sie mit diesen durch in beiden Richtungen arbeitende Übertragungsleitungen verbunden, was in Fig. 1 durch an beiden Enden mit Pfeilen versehene Doppellinien symbolisiert ist.

Der Zeitmeßeinheit 12 ist u. a. ein Zwischenspeicher 15 nachgeschaltet, der bei dem dargestellten, nur einen einzigen Meßfühler aufweisenden Ausführungsbeispiel dazu dient, die von der Zeitmeßeinheit 12 während einer vollen Umdrehung der Skalenscheibe 2 der Reihe nach ausgemessenen und eine vollständige Meßreihe bildenden Zeitabstände sämtlicher jeweils unmittelbar aufeinander folgender Markierungen bzw. der ihnen zugeordneten Gebersignale zumindest solange zu speichern, bis das jeweilige Markierungspaar bei der nächsten Umdrehung am Meßfühler vorbeiläuft und der hierbei gewonnene neue Zeitmeßwert mit dem entsprechenden Meßwert der vorausgehenden Meßreihe beispielsweise durch Quotientenbildung verglichen werden kann, was durch die zu diesem Zweck sowohl mit dem Ausgang der Zeitmeßeinheit 12 als auch dem Ausgang des Zwischenspeichers 15 verbundene Vergleichsschaltung 16 geschieht. Daß dabei immer nur die bei aufeinanderfolgenden Umdrehungen gewonnenen Zeitabstände jeweils desselben Markierungspaares miteinander verglichen werden, wird durch die Steuerschaltung 14 mit Hilfe der an sie von der Identifizierungsschaltung 13 gelieferten Informationen sichergestellt.

Das Ergebnis dieser Vergleiche wird an eine Rechen- und Speicherschaltung 17 weitergegeben, die in Abhängigkeit davon, ob eine Übereinstimmung der einander entsprechenden Werte innerhalb vorbestimmter Grenzen festgestellt wurde oder nicht die ihr von der Zeitmeßeinheit 12 gelieferten Zeitabstände als längerfristig brauchbare Eichwerte speichert oder sie nur zur Berechnung der momentanen Dreh- bzw. Winkelgeschwindigkeit heranzieht, die dann von der Anzeigeeinheit 18 visuell dargestellt und/oder zur weiteren Verarbeitung in Form elektrischer Signale an nicht dargestellte weitere Geräte abgegeben wird.

Es sei darauf hingewiesen, daß die Signalübertragung zwischen den in Fig. 1 dargestellten Blöcken der Meß- und Auswerteschaltung 10 nicht nur seriell sondern auch parallel oder in einer gemischten Form erfolgen kann. In den beiden letzteren Fällen umfassen dann auch die mit einfachen Strichen wiedergegebenen Verbindungen mehrere parallele Übertragungsleitungen.

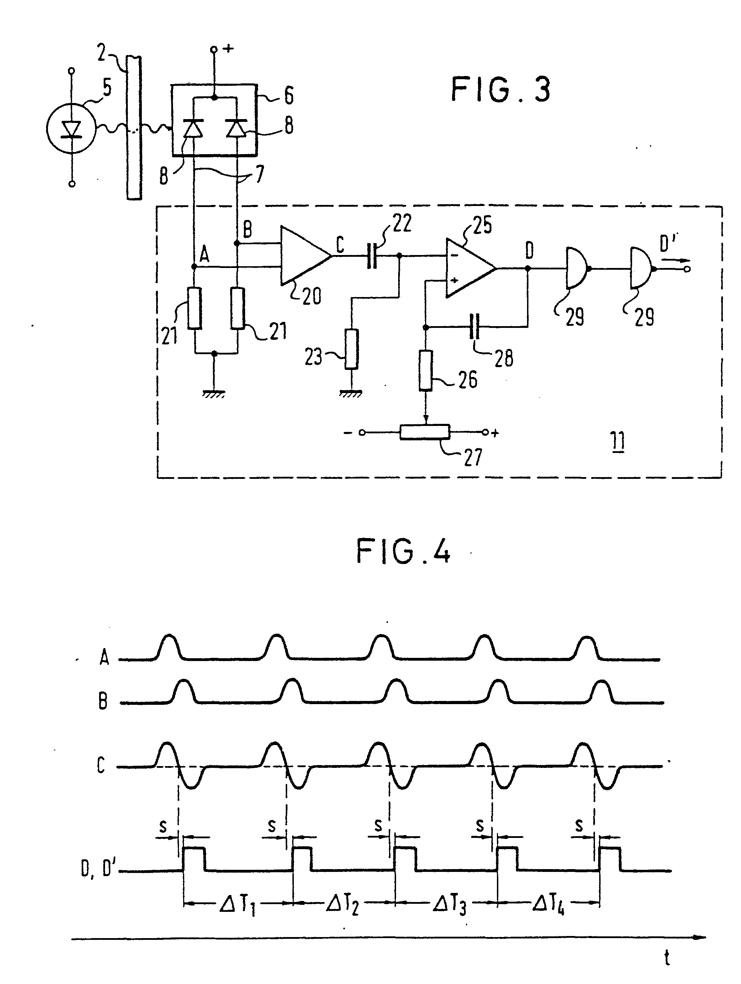

In Fig. 2 ist ein zwei Markierungen umfassender Ausschnitt eines Markierungsträgers 2 wiedergegeben, bei dem anders als in Fig. 1 die große Fläche des Markierungsträgers lichtundurchlässig ist, so daß das von der Lichtquelle 5 ausgehende Meßlichtbündel nur dann zum Meßfühler 6 zu gelangen vermag, wenn eine Markierung 3 am Meßfühler vorbeiläuft. Dieser Meßfühler besteht gemäß Fig. 2 im wesentlichen aus einer Differential-Fotodiode, deren lichtempfindliche Flächen 8,8 durch einen schmalen Steg 9 voneinander getrennt sind. Wie der Fig. 2 deutlich zu entnehmen ist, kommt es nicht darauf an, daß die Markierungsstreifen 3 eine besonders genau definierte geometrische Form besitzen, da aus ihnen mit Hilfe der Differential-Fotodiode 8,8 und des im folgenden unter Bezugnahme auf Fig. 3 ausführlicher beschriebenen Gebers 11 jeweils eine ideale Marke abstrahiert wird, die in Fig. 2 jeweils durch die strichpunktierten Linien 19 symbolisiert wird. Wie Fig. 2 ebenfalls zeigt, umfaßt bei Verwendung einer Differential-Fotodiode die Leitung 7 zwei voneinander isolierte Adern, die gemäß Fig. 3 einerseits jeweils an einen der beiden Eingänge eines Differenzverstärkers 20 angeschlossen und andererseits über Lastwiderstände 21 mit der Systemmasse verbunden sind.

Bei einer gemäß der Erfindung besonders bevorzugten Ausführungsform ist vorgesehen, daß in jede der von den lichtempfindlichen Flächen 8,8 der Differential-Fotodiode zu einem der Eingänge des Differenzverstärkers 20 führende Leitung ein in Fig. 3 nicht dargestellter Verstärker mit hohem Verstärkungsfaktor eingeschaltet ist, um die von den lichtempfindlichen Flächen der Fotodiode abgegebenen Signale vor der Differenzbildung vorzuverstärken. Dadurch läßt sich erreichen, daß das in Fig. 4 in der dritten Zeile von oben wiedergegebene Ausgangssignal des Differenzverstärkers 20 einen sehr steilen und damit zeitlich exakt festliegenden und präzise detektierbaren Nulldurchgang aufweist.

Der Ausgang des Differenzverstärkers 20 ist zur gleichspannungsmäßigen Entkopplung über einen Kondensator 22 an den über einen Widerstand 23 mit der Systemmasse verbundenen negativen Eingang eines Komparators 25 gelegt. Der positive Eingang des Komparators 25 ist über einen Widerstand 26 mit einer vereinfacht als Potentiometer 27 dargestellten, einstellbaren Spannungsquelle verbunden, die das zur Erkennung des Null-Durchgangs des vom Differenzverstärker 20 abgegebenen Ausgangssignals erforderliche Referenzpotential liefert. Der Ausgang des Komparators 25 ist einerseits mit dem Eingang des ersten von zwei als Puffer dienenden Invertern 29 verbunden und andererseits über einen Kondensator 28 zur Erzeugung einer definierten Hysterese auf den positiven Eingang des Komparators 25 rückgekoppelt. Bei den Invertern 29 kann es sich beispielsweise um TTL-Bausteine handeln, die dazu dienen, das vom Komparator 25 abgegebene Signal so zu formen, daß es ohne weiteres in die nachfolgenden Schaltungseinheiten eingespeist werden kann.

Die Arbeitsweise des in Fig. 3 dargestellten Gebers soll nun anhand der Fig. 4 erläutert werden, in der über einer Zeitachse die Signale wiedergegeben sind, die an den Punkten A bis D' der Geberschaltung 11 auftreten, wenn am Meßfühler 6 eine Reihe von Markierungen vorbeiläuft.

Jedes Mal, wenn das Meßlichtbündel durch eine Markierung 3 unterbrochen, bzw. bei der Ausführungsform nach Fig. 2 durchgelassen wird, entsteht an den Punkten A und B eine Halbwelle, wobei das Signal am Punkt B gegen das Signal am Punkt A zeitlich versetzt ist, da die Differential-Fotodiode 8,8 so angeordnet ist, daß ihr Trennsteg 9 sich in etwa in radialer Richtung bezüglich der Drehachse des Markierungsträgers 2 erstreckt, so daß zuerst die eine und dann die andere der beiden lichtempfindlichen Flächen der Diode von der Markierung überstrichen wird.

Aus den an den Punkten A und B auftretenden Halbwellen erzeugt der Differenzverstärker das Signal C, das dann den in Fig. 4 wiedergegebenen steilen und somit eine ideale Marke bildenden Nulldurchgang aufweist, wenn die umfangsmäßige Breite der Markierungen 3 größer als die Breite des Trennsteges 9

12

und kleiner als der Durchmesser der Differential-Fotodiode 8,8 ist.

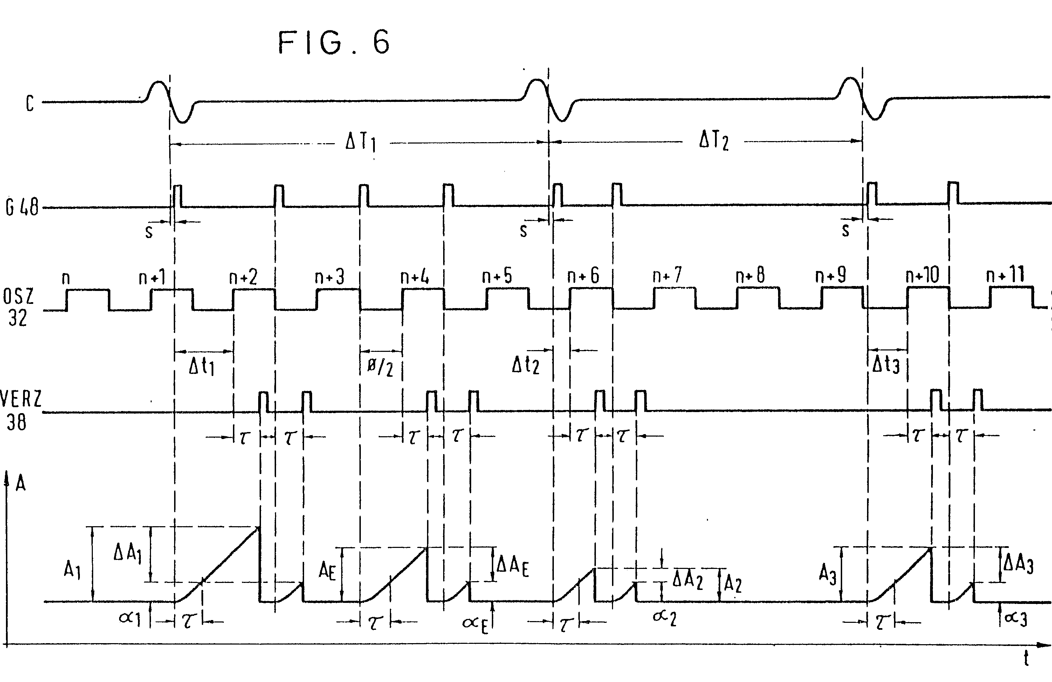

Erkannt wird der Nulldurchgang der Signale C mit Hilfe des Komparators 25, dem durch die Potentialquelle 27 ein entsprechender Vergleichspegel vorgegeben ist. Am Ausgang des Komparators 25 erscheinen die Rechtecksignale D, deren steigende Flanken sehr steil sind und in einem eindeutigen zeitlichen Zusammenhang mit den Nulldurchgängen der Signale C stehen. Die zwischen einem jeden solchen Nulldurchgang und der zugehörigen steigenden Impulsflanke auftretende zeitliche Verzögerung s ist in den Fig. 4 und 6 sehr stark übertrieben dargestellt. Tatsächlich ist sie so klein, daß eventuell auftretende kurzzeitige Schwankungen dieser Verzögerung die Genauigkeit des Meßergebnisses nicht beeinflussen. Da dasselbe auch für die an den Puffer-Invertern 29 auftretenden Signalverzögerungen gilt, kann das am Ausgang des zweiten Inverters 29 auftretende Signal D′ dem Signal D am Ausgang des Komparators 25 gleichgesetzt werden. Die steigenden Flanken der Rechtecksimpulse D′ stellen also den optischen Schwerlinien 19 der Markierungsstreifen 3 eindeutig und zumindest kurzzeitig exakt reproduzierbar zugeordnete ideale Marken dar, deren Zeitabstände $\Delta T\nu$ bei gegebener Winkelgeschwindigkeit des Markierungsträgers ein genaues Maß für die Absolutwerte der Winkelabstände dieser optischen Schwerlinien bilden. Sind umgekehrt diese absoluten Winkelabstände bekannt, so kann aus den Meßwerten $\Delta T\nu$ die momentane Winkelgeschwindigkeit sehr genau berechnet werden.

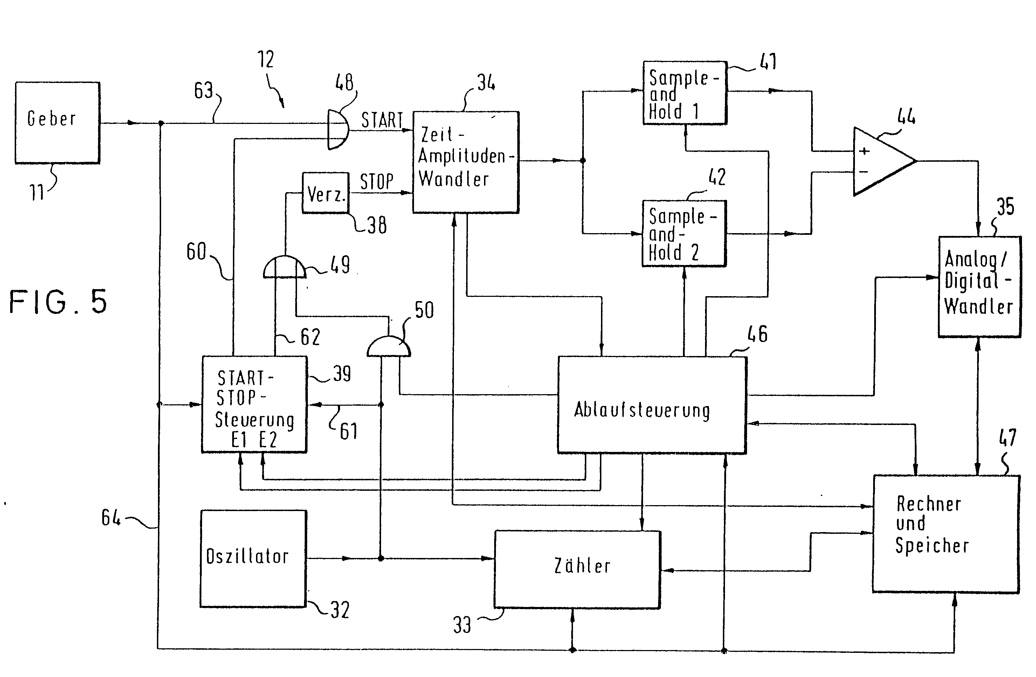

Eine zur hochgenauen Messung der Zeitabstände $\Delta t\nu$ bevorzugte Zeitmeßeinheit 12 ist in Fig. 5 schematisch dargestellt. Sie basiert auf dem Prinzip, daß einerseits zur Ermittlung von Zeit-Grobmeßwerten die Schwingungsperioden eines freilaufenden, quarzgesteuerten Oszillators 32 mit Hilfe eines Zählers 33 abgezählt werden. Dabei ist die Frequenz des beispielsweise ein rechteckförmiges Signal abgebenden Quarzoszillators 32 so gewählt, daß er auch bei der maximalen Drehgeschwindigkeit der Welle 1 während jedes auszumessenden Zeitraums $\Delta T\nu$, d. h. in der Zeit, die zwischen dem Vorbeilaufen zweier beliebiger aufeinanderfolgender Markierungen 3 am Meßfühler 6 vergeht, eine ausreichende Anzahl von Schwingungsperioden bzw. Ausgangsimpulsen liefert. Ist diese Frequenz $F_0$, so gilt für einen Zeitabstand $\Delta T$, innerhalb dessen der Zähler 33 m Oszillatorperioden zählt, in erster Näherung

$$\Delta T_G = m \ (1/F_0)$$

(G = Grobmeßwert), oder, wenn $\emptyset = 1/F_0$ die zeitliche Länge einer Quarzperiode ist

$$\Delta T_G = m \ \emptyset.$$

Ohne zusätzliche Maßnahmen könnte also $\Delta T\nu$ nur in ganzzahligen Vielfachen der Zeiteinheit $\emptyset$ gemessen werden, was bei hohen Drehzahlen, also sehr kleinen $\Delta T\nu$ zur Erlangung einer hohen Meßgenauigkeit eine extrem hohe Quarzfrequenz $F_0$ erfordern würde.

Es ist daher zur Erfassung von Zeit-Feinmeßwerten eine sogenannte Zeit-Amplituden-Wandlerschaltung 34 vorgesehen, die im wesentlichen einen Kondensator umfaßt, der nach Triggerung durch ein START-Signal mit Hilfe einer Konstantstromquelle geladen wird, so daß die an ihm abfallende Spannung nach einer kurzen Anfangsphase mit der Zeit linear solange anwächst, bis der Aufladevorgang durch ein STOP-Signal beendet wird. Die Amplitude des nach dem STOP-Signal am Ausgang dieser Zeit-Amplituden-Wandlerschaltung anliegenden Signals stellt somit ein Maß für den zwischen dem START- und dem STOP-Signal verstrichenen Zeitraum dar.

Bei der Zeitmeßeinheit 12 gemäß Fig. 5 wird die Zeit-Amplituden-Wandlerschaltung 34 nun so eingesetzt, daß sie durch die vom Geber 11 über das ODER-Gatter 48 kommenden Signale gestartet und durch die nächste, hierauf folgende, steigende Flanke eines Oszillatorimpulses angehalten wird. Dieses STOP-Signal wird ihr unter Kontrolle der Ablaufsteuerung 46 über ein zur Ausblendung der nicht benötigten Oszillatorimpulse dienendes UND-Gatter 50, ein ODER-Gatter 49 und ein Verzögerungsglied 38 zugeführt, dessen Bedeutung weiter unten noch genauer erläutert wird.

Die Zeit-Amplituden-Wandlerschaltung 34 mißt also für jedes Geber-Signal mit hoher Genauigkeit die um einen konstanten, durch das Verzögerungsglied 38 vorgegebenen Wert $\tau$ verlängerte Zeit, die zwischen dem Auftreten der steigenden Flanke dieses Geber-Signals und der nächsten steigenden Impulsflanke des freilaufenden Oszillators vergeht. Bezeichnet man diese Fein-Zeitmeßwerte für die beiden den insgesamt zu messenden Zeitabstand $\Delta T$ definierenden Geber-Signale mit $\Delta t_1$ (für das zeitlich frühere Signal) und $\Delta t_2$ (für das zeitlich spätere Signal) und ermittelt der Zähler 33, daß zwischen der unmittelbar auf das frühere Gebersignal folgenden steigenden Oszillator-Impulsflanke und der unmittelbar auf das spätere Gebersignal folgenden steigenden Oszillator-Impulsflanke m Oszillatorschwingungen erfolgt sind, so gilt

$$\Delta T = \Delta t_1 + m \ (1/F_0) - \Delta t_2$$

$$= \Delta T_G + \Delta t_1 - \Delta t_2$$

Da der Zähler 33 den Zählwert m in digitaler Form liefert, ist es zweckmäßig, auch die analogen Ausgangssignalamplituden der Zeit-Amplituden-Wandlerschaltung 34 zu digitalisieren, was mit Hilfe des Analog/Digital-Wandlers 35 geschieht.

Die nach obiger Gleichung erfolgende Berechnung der Zeitabstandsmeßwerte ΔT nimmt dann der Rechner 47 vor, der neben den erforderlichen Rechenschaltungen auch einen Speicher umfaßt.

Die Ablaufsteuerung 46, die beispielsweise als Johnson-Zähler aufgebaut sein kann, übt neben der bereits erwähnten Steuerung des UND-Gatters 50 noch eine ganze Reihe von weiteren Funktionen aus, die im folgenden noch im Zusammenhang mit der Schilderung der übrigen Bestandteile der Zeitmeßeinheit 12 erläutert werden, soweit sie von wesentlicher Bedeutung sind.

Von den übrigen Bestandteilen der Zeitmeßeinheit 12 ist zunächst die START-STOP-Steuerung 39 zu nennen, die über die ODER-Gatter 48 bzw. 49 START- bzw. STOP-Signale an die entsprechenden Eingänge der Zeit-Amplituden-Wandlerschaltung 34 abgeben kann. Dabei lassen sich grundsätzlich zwei verschiedene Funktionsarten unterscheiden, je nach dem, ob mit Hilfe dieser intern erzeugten START-STOP-Signale die Zeit-Amplituden-Wandlerschaltung 34 durch Vergleich mit dem vom quarzgesteuerten Oszillator 32 gebildeten Frequenznormal nachgeeicht oder ob zur Eliminierung von Laufzeitunterschieden und Nichtlinearitäten ein Korrekturwert erzeugt werden soll.

Im ersten Fall erhält die START-STOP-Steuerung 39 von der Ablaufsteuerung 46 beispielsweise über den Eingang E1 ein Befehlssignal, worauf sie zunächst über die Leitung 60 ein START-Signal abgibt, das genau mit der ihr über die Leitung 61 zugeführten Oszillatorschwingung synchronisiert ist, beispielsweise genau mit der fallenden Flanke eines der vom quarzgesteuerten Oszillator 32 abgegebenen Rechtecksimpulse zusammenfällt. Beispielsweise eine Halbperiode der Oszillatorschwingung später, d. h. also bei der nächsten steigenden Impulsflanke liefert die Steuerung 39 dann ein STOP-Signal über die Leitung 62, so daß es möglich wird, den in der Zwischenzeit erzeugten Amplitudenwert des Ausgangssignals der Zeit-Amplituden-Wandlerschaltung 34 mit der sehr genauen und konstanten Schwingung des Quarzoszillators zu vergleichen. Dieser Vergleich kann auch mit mehreren Halb- oder Vollperioden erfolgen. Darüber hinaus ist es möglich, die Anzahl der von Eichmessung zu Eichmessung herangezogenen Oszillatorperioden zu variieren, so daß sich eine ganze Eichskala für die Ausgangsamplituden der Zeit-Amplituden-Wandlerschaltung 34 ergibt.

Im zweiten Fall liefert die Ablaufsteuerung 46 ein Befehlssignal an den Eingang E2 der START-STOP-Steuerung 39, wodurch diese veranlaßt wird, auf den Leitungen 60 und 62 genau gleichzeitig ein START-bzw. STOP-Signal abzugeben. Da das STOP-Signal durch das Verzögerungsglied 38 um die Zeit τ verzögert bei der Zeit-Amplituden-Wandlerschaltung 34 ankommt, erzeugt diese ein diesen Zeitraum τ entsprechendes Ausgangssignal. Da die Zeit τ gerade so gewählt ist, daß sie etwas länger als der Anlaufzeitraum ist, in dem das Ausgangssignal der Zeit-Amplituden-Wandlerschaltung in nicht linearer Weise anwächst, stellt das so gewonnene Ausgangssignal einen Korrekturwert dar, der geeignet ist, den Einfluß dieser Nichtlinearität aus einem gerade zuvor gewonnenen Meß- oder Eichwert zu eliminieren. Auch werden durch diesen Korrekturwert Laufzeitunterschiede erfaßt, die eventuell zwischen dem der Zeit-Amplituden-Wandlerschaltung das START-Signal zuführenden Signalpfad und dem entsprechenden STOP-Signalpfad aufgrund parasitärer Effekte vorhanden sind.

Jeder dieser Meßwerte A wurde ja so gewonnen, daß die Zeit-Amplituden-Wandlerschaltung 34 nicht nur während des auszumessenden Zeitraums $\Delta t_{1,2,3}$ sondern auch noch während der zusätzlichen Zeitspanne τ im Betrieb war. Wenn diese Zeitspanne τ auch am Ende der jeweiligen Meßzeit $\Delta t_{1,2,3} + \tau$ angehängt wurde, so enthält durch die spezielle Wahl von τ doch jeder Meß- bzw. Eichwert A am Ausgang der Zeit-Amplituden-Wandlerschaltung 34 einen während der ersten τ Zeiteinheiten gewonnenen im wesentlichen nichtlinearen Anteil α und einen anschließend gewonnenen, zum eigentlich interessie-renden Zeitraum $\Delta t_{1,2,3}$ streng proportionalen Anteil Δ A :

$$A = \alpha + \Delta A$$

wobei zunächst die Größe dieser beiden Anteile nicht bekannt ist. Daher wird unter Regie der Ablaufsteuerung 46 der Meßwert A, der ein Zeitabstands- oder ein Eichmeßwert sein kann, zunächst in einer ersten Sample-and-Hold-Schaltung 41 gespeichert. Sofort danach wird die Zeit-Amplituden-Wandlerschaltung 34 in den Ausgangszustand zurückgesetzt und von der Ablaufsteuerung 46 ein Befehlssignal an den Eingang E2 der START-STOP-Steuerung 39 gegeben, die dann in der oben beschriebenen Weise gleichzeitig ein START- und STOP-Signal über die Leitungen 60 und 62 abgibt, wodurch die Zeit-Amplituden-Wandlerschaltung 34 veranlaßt wird, über den Zeitraum τ hinweg genau den zu obiger Gleichung gehörenden im wesentlichen nichtlinearen Anteil α zu erzeugen. Dieser Anteil α wird dann unter Steuerung der Ablaufsteuerung 46 in eine zweite Sample-and-Hold-Schaltung 42 übernommen, worauf ein Differenzverstärker 44 gemäß

$$A - \alpha = \Delta A$$

den zum eigentlichen interessierenden Zeitraum $\Delta t_{1,2,3}$ streng proportionalen Wert Δ A errechnen und an den Analog/Digital-Wandler 35 weitergeben kann.

Diese Abläufe sind in Fig. 6 in Form eines Signal-Diagramms nochmals zusammengefaßt dargestellt.

In der obersten Zeile C sind drei Signale wiedergegeben, wie sie im Geber 11 am Punkt C entstehen, wenn am Meßfühler 6 der Reihe nach drei Markierungen vorbeilaufen. Die Nulldurchgänge der drei Signale C stellen die aus den realen Markierungen abstrahierten idealen Marken dar, deren Zeitabstände

14

$\Delta$ T$_1$ und $\Delta$ T$_2$ ausgemessen werden sollen.

In der zweiten Zeile zeigt Fig. 6 die am Ausgang des ODER-Gatters 48 erscheinenden Impulse. Dies sind zunächst einmal die drei jeweils den Signalen C zugeordneten Impulse, die über die Leitung 63 vom Geber 11 an das Gatter 48 gelangen und von diesem weitergegeben werden. Die steigenden Flanken dieser Impulse sind um s gegen die Nulldurchgänge der Signale C verzögert, doch ist diese Verzögerung — anders als dargestellt — außerordentlich klein und spielt auch bei einer angestrebten sehr hohen Meßgenauigkeit keine Rolle, da sie über die kurzen Zeiten $\Delta$ T$_1$ bzw. $\Delta$ T$_2$ als konstant angenommen werden kann.

Zur Ermittelung von $\Delta$ T$_1$ und $\Delta$ T$_2$ ist es also ohne Fehler möglich, die Zeitabstände der steigenden Flanken der in Rede stehenden Impulse am Ausgang des Gatters 48 zu messen.

Da diese dem Gatter 48 vom Geber 11 zugeführten Impulse über die Leitung 64 auch an den Zähler 35 und die Ablaufsteuerung 46 gelangen, kann aus dem Zähler 33 der nach dem ersten dieser drei Impulse erreichte Zählwert ausgelesen werden.

Gemäß Fig. 6, in deren dritter Zeile von oben die Rechtecksimpulse des Oszillators 32 dargestellt sind, ist dies der Zählwert n + 2.

In entsprechender Weise werden nach dem zweiten Geberimpuls aus dem Zähler 33 der Zählwert n + 6 und nach dem dritten Geberimpuls der Zählwert n + 10 ausgelesen.

Somit erhält man für die interessierenden Zeitabstände $\Delta$ T$_1$ und $\Delta$ T$_2$ die Grobmeßwerte

$$\Delta T_{1G} = [(n + 6) - (n + 2)]\varnothing = 4\ \varnothing$$

$$\Delta T_{2G} = [(n + 10) - (n + 6)]\varnothing = 4\ \varnothing$$

Man sieht, daß aufgrund der hier angenommenen Tatsache, daß zwischen den einzelnen Geberimpulsen nur wenige Oszillatorimpulse auftreten, diese Grobmeßwerte nicht geeignet sind, um den vorhandenen Unterschied zwischen $\Delta$ T$_1$ und $\Delta$ T$_2$ sichtbar zu machen.

Daher wird gleichzeitig mit der steigenden Flanke eines jeden einem Gebersignal entsprechenden Ausgangsimpulses des Gatters 48 die Zeit-Amplituden-Wandlerschaltung 34 gestartet, deren Ausgangssignal, wie in der untersten Zeile von Fig. 6 dargestellt, zunächst in nichtlinearer Weise, spätestens aber nach der Zeit $\tau$ streng proportional mit der Zeit anwächst.

Die auf die steigenden Flanken der vom Geber 11 stammenden Impulse am Ausgang des Gatters 48 jeweils unmittelbar folgenden steigenden Impulsflanken des Oszillators 32 sind in Fig. 6 mit den Zählwerten n + 2, n + 6 und n + 10 gekennzeichnet und besitzen von den ersteren die als Zeit-Feimeßwerte interessierenden Zeitabstände $\Delta$ t$_1$, $\Delta$ t$_2$ und $\Delta$ t$_3$. Die eben genannten steigenden Impulsflanken des Oszillators 32 werden über die Gatter 50 und 49 an das Verzögerungsglied 38 gegeben, das, wie in der zweiten Zeile von unten in Fig. 6 dargestellt, mit der vorbestimmten Verzögerungszeit $\tau$ einen STOP-Befehl an die Zeit-Amplituden-Wandlerschaltung 34 weitergibt.

Somit stehen am Ausgang der Zeit-Amplituden-Wandlerschaltung zu den Zeiten $\Delta$ t$_1$ + $\tau$, $\Delta$ t$_2$ + $\tau$ und $\Delta$ t$_3$ + $\tau$ die Amplituden A$_1$, A$_2$ und A$_3$ zur Verfügung, die jeweils in die zuvor gelöschte erste Sample-and-Hold-Schaltung 41 eingegeben werden. Gleichzeitig wird die Zeit-Amplituden-Wandlerschaltung 34 auf ihren Ausgangspegel zurückgesetzt.

Mit der jeweils nächsten fallenden Oszillatorimpulsflanke erzeugt nun die über ihren Eingang E2 von der Ablaufsteuerung 46 aktivierte START-STOP-Steuerung gleichzeitig einen START- und einen STOP-Impuls.

Der START-Impuls erscheint am Ausgang des Gatters 48 praktisch ohne Verzögerung, wie dies in Zeile 2 der Fig. 6 dargestellt ist und bewirkt das in der untersten Zeile dieser Figur dargestellte erneute Ansteigen des Ausgangssignals der Zeit-Amplituden-Wandlerschaltung 34.

Der STOP-Impuls durchläuft die Verzögerungsschaltung 38 und erscheint mit der Verzögerung $\tau$ an deren Ausgang. Nach jeder Meßwerterfassung wird also die Zeit-Amplituden-Wandlerschaltung nochmals für die Zeit $\tau$ in Betrieb gesetzt, was zur Erzeugung der in der untersten Zeile der Fig. 6 ebenfalls dargestellten Korrekturwerte $\alpha_1$, $\alpha_2$ und $\alpha_3$ führt.

Diese Korrekturwerte werden jeweils in die zweite Sample-and-Hold-Schaltung 42 eingegeben und durch den Differenzverstärker 44 von den in der ersten Sample-and-Hold-Schaltung jeweils gerade enthaltenen Meßwerten A$_1$ bzw. A$_2$ bzw. A$_3$ subtrahiert, so daß nach den Gleichungen

$$A_1 - \alpha_1 = \Delta\ A_1$$

$$A_2 - \alpha_2 = \Delta\ A_2$$

$$A_3 - \alpha_3 = \Delta\ A_3$$

in den Analog/Digitalwandler 35 die zu den interessierenden Zeit-Feinmeßwerten $\Delta$ t$_1$, $\Delta$ t$_2$ und $\Delta$ t$_3$ streng proportionalen Amplitudenwerte eingegeben werden.

Hieraus kann der Rechner und Speicher 47 dann die Zeit-Feinmeßwerte bestimmen und gemäß den Gleichungen

15

$$\Delta\ T_1 = \Delta\ T_{1G} + \Delta\ t_1 - \Delta\ t_2$$

$$\Delta\ T_2 = \Delta\ T_{2G} + \Delta\ t_2 - \Delta\ t_3$$

die gesuchten Zeitabstände $\Delta\ T_1$ und $\Delta\ T_2$ berechnen.

Es sei hier nochmals darauf hingewiesen, daß sich die so gewonnenen Markierungspaarzeitabstände $\Delta\ T_1$, $\Delta\ T_2$, ... beispielsweise zu Markierungseigenzeitabständen aufsummieren lassen, ohne daß es zu einer Summierung der Meßfehler kommt. Aus den beiden obigen Gleichungen folgt nämlich

$$\Delta\ T_1 + \Delta\ T_2 + ... = \Delta\ T_{1G} + \Delta\ t_1 - \Delta\ t_2 + \Delta\ T_2G + \Delta\ t_2 - \Delta\ t_3 + ...$$

Man sieht, daß hier mit Ausnahme von $\Delta\ t_1$ sämtliche mit Meßfehlern behaftete Feinzeitmeßwerte $\Delta\ t_2$, $\Delta\ t_3$ ... herausfallen, so daß sich ihre Fehler nicht summieren können.

Die die Messung der Korrekturwerte $\alpha_1$, $\alpha_2$, $\alpha_3$ .... einleitenden intern erzeugten START-Impulse müssen nicht unbedingt in der dargestellten Weise zeitlich mit den fallenden Oszillatorimpulsflanken korreliert sein, die unmittelbar auf die die Aufnahme der Meßwerte $A_1$, $A_2$, $A_3$ ... be endenden steigenden Oszillatorimpulsflanken folgen. Wesentlich ist nur, daß sie so rechtzeitig nach der jeweils vorausgegangenen Meßwerterfassung erzeugt werden, daß der durch sie erhaltene Korrekturwert $\alpha_1$, $\alpha_2$, $\alpha_3$ ... ein vernünftiges Maß für den im zugehörigen Meßwert enthaltenen im wesentlichen nichtlinearen Anteil darstellt. Außerdem muß dafür gesorgt sein, daß die Korrekturwerterfassung abgeschlossen ist, bevor die nächste Meßwert- bzw. Eichwerterfassung beginnt.

Weiterhin ist in Fig. 6 eine im Zeitraum $\Delta\ T_1$ stattfindende Eichwerterfassung zum Nacheiden der Zeit-Amplituden-Wandlerschaltung 34 mit Hilfe des Quarzoszillators 32 dargestellt.

Zu diesem Zweck erzeugt die über den Eingang E1 von der Ablaufsteuerung 46 getriggerte START-STOP-Steuerung 39 zunächst einen START-Impuls, der exakt mit dem Ausgangssignal des Oszillators 32 synchronisiert ist. In Fig. 6 ist dies der dritte Impuls von links in der Zeile G48.

Ebenso exakt mit dem Oszillatorsignal synchronisiert gibt die START-STOP-Steuerung 39 um eine vorgegebene Anzahl von Oszillatorhalb- oder vollperioden verzögert ein STOP-Signal über die Leitung 62 ab. In Fig. 6 ist der einfacheren Darstellung halber angenommen, daß der STOP-Impuls genau eine Quarz-Halbperiode nach dem START-Impuls erzeugt wird. Er durchläuft ebenfalls des Verzögerungsglied 38, so daß also die Zeit-Amplituden-Wandlerschaltung nach der Zeit $\emptyset/2 + \tau$ angehalten wird ; an ihrem Ausgang liegt dann ein Signal mit der Amplitude $A_E$ an, das wie ein normaler Zeitmeßwert zunächst in der ersten Sample-and-Hold-Schaltung 41 zwischengespeichert wird. Hierauf wird durch Ansteuerung des Eingangs $E_2$ der START-STOP-Steuerung 39 in der gleichen Weise, wie dies oben für die Zeitmeßwerte beschrieben wurde, ein Korrekturwert $\alpha_E$ erzeugt, so daß der Differenzverstärker 44 den eigentlich interessierenden Eichwert $\Delta\ A_E$ erzeugen kann, der dann ebenfalls digitalisiert und vom Rechner 47 weiter verarbeitet wird.

Da allgemein zwischen aufeinanderfolgenden Geberimpulsen eine genügend große Anzahl von Oszillatorimpulsen auftritt, ist es innerhalb jedes Zeitraumes $\Delta\ T$ möglich, eine Nacheichung der Zeit-Amplituden-Wandlerschaltung 34 in der eben beschriebenen Weise vorzunehmen.

Abschließend sollen nun noch unter Bezugnahme auf ein konkretes Ausführungsbeispiel einer erfindungsgemäßen Vorrichtung einige Hinweise auf die Funktion dieser Vorrichtung gegeben werden.

Es wird dabei von einer Vorrichtung ausgegangen, bei der die Abtasteinrichtung einen feststehenden Meßfühler umfaßt, während der als Scheibe ausgebildete Markierungsträger sich mit dem rotierenden Körper, dessen Drehzahl bzw. Drehgeschwindigkeit gemessen werden soll, mitdreht. Auf der Markierungsscheibe ist, wie oben beschrieben, eine Vielzahl von Markierungen angebracht, die aufgrund der Relativdrehung zwischen Scheibe und Abtasteinrichtung der Reihe nach am elektro-optischen Meßfühler vorbeilaufen, wobei dieser jedesmal in der oben dargestellten Weise ein elektrisches Signal mit einem zeitlich in einem sehr genauen Zusammenhang mit der optischen Markierungsschwerlinie stehenden Nulldurchgang erzeugt. Am Ausgang des dem Meßfühler nachgeschalteten Gebers erscheinen Rechteckimpulse, deren steigende Flanken mit diesen Nulldurchgängen in einem definierten zeitlichen Zusammenhang stehen und daher als ideale Marken verwendet werden können, deren Zeitabstände ausgemessen werden sollen, um die zunächst unbekannten absoluten Winkelabstände der Markierungen bzw. ihrer optischen Schwerlinien und die veränderbare Winkelgeschwindigkeit des rotierenden Körpers zu bestimmen.

In den Rechen- und Speicherschaltungen der Meß- und Auswerteschaltung sind zunächst keinerlei Informationen über die Markierungsscheibe enthalten, auf der zur Kennzeichnung einer Null-Markierung der Winkelabstand, den diese Null-Markierung mit der ihr in Drehrichtung unmittelbar vorausgehenden Markierung einschließt, so groß gewählt ist, daß der zugehörige Markierungspaarzeitabstand zusammen mit dem unmittelbar vorausgehenden Markierungspaarzeitabstand mit Sicherheit den kleinsten auf dem Markierungsträger auffindbaren Quotienten bildet.

Nachdem der rotierende Körper in Drehung versetzt ist, wird die erfindungsgemäße Meßvorrichtung zu einem beliebigen Zeitpunkt gestartet. Sie ist so programmiert, daß sie zunächst lediglich die Zeit-Grobmeßwerte der Zeitabstände sämtlicher auf der Scheibe vorhandener Markierungspaare bestimmt, wobei in diesem Zusammenhang unter einem Markierungspaar jeweils zwei unmittelbar benachbarte Markierungen verstanden werden. Aus jeweils zwei unmittelbar hintereinander gewonnenen Grobmeßwerte von Markierungspaarzeitabständen werden zur Eliminierung der momentanen Drehgeschwindigkeit die Quotienten gebildet. Diese Quotienten werden der Reihe nach miteinander verglichen, um den kleinsten herauszufinden. Dabei muß immer nur ein Quotient gespeichert werden, wenn man so vorgeht, daß jeder neugewonnene Quotient sofort wieder gelöscht wird, wenn er größer oder gleich dem gespeicherten Quotienten ist, und anstelle des alten Quotienten gespeichert wird, wenn er kleiner als dieser ist.

Nimmt man den extremsten Fall an, daß nämlich der Startbefehl für die Meß- und Auswerteschaltung unmittelbar nach dem Vorbeilaufen der Null-Markierung am Meßfühler gegeben wurde, so braucht die Meß- und Auswerteschaltung nicht ganz eine volle Umdrehung, um den kleinsten Quotienten herauszufinden und eine weitere Umdrehung, um zu erkennen, daß bis zum Wiederauftreten dieses kleinsten Quotienten kein kleinerer mehr erschienen ist. Am Ende dieser zweiten Umdrehung kann die Meß- und Auswerteschaltung also damit beginnen, ausgehend von der so erkannten Null-Markierung die Markierungspaarzeitabstände exakt, d. h. unter Bildung und Verarbeitung auch der Fein-Zeitmeßwerte in der oben beschriebenen Weise auszumessen, wobei die Zeit-Amplituden-Wandlerschaltung nach jeder Feinzeitmessung (und der hierauf folgenden Korrekturwertbildung) mit Hilfe des quarzgesteuerten Oszillators nachgeeicht werden kann. Zur Identifizierung der Markierungen werden gleichzeitig die Meßfühlersignale ausgehend von der Null-Markierung abgezählt, so daß am Ende der dritten Umdrehung der Meß- und Auswerteschaltung neben einer ersten vollständigen Meßreihe von Markierungspaarzeitabständen auch eine Information über die Gesamtzahl der auf em Markierungsträger vorhandenen Markierungen zur Verfügung steht.

Wurde, wie dies oben mehrfach und insbesondere unter Bezugnahme auf Fig. 6 beschrieben wurde, die Messung der Markierungspaarzeitabstände fortlaufend durchgeführt, d. h. also die Zählung der Oszillatorperioden mit dem Vorbeilaufen beispielsweise der ersten Markierung gestartet und dann kontinuierlich fortgesetzt (wobei der auf das Vorbeilaufen jeder weiteren Markierung folgende Zählwert nur ausgelesen und zur Ermittlung des zugehörigen Markierungspaar-Zeitgrobmeßwertes weiter verarbeitet wurde), so verfügt die Meß- und Auswerteschaltung dann, wenn zu Beginn der vierten Umdrehung die erste Markierung erneut am Meßfühler vorbeiläuft, auch über den ersten Markierungseigenzeitabstand, der wie die Markierungspaarzeitabstände aus einem Grobmeßwert und zwei Feinmeßwerten errechnet wird. Für die unmittelbar folgende zweite, dritte usw. Markierung ergibt sich in gleicher Weise im Verlauf der vierten Umdrehung der Markierungseigenzeitabstand, so daß die Meß- und Auswerteschaltung während dieser vierten Umdrehung nicht nur die zweite Meßreihe von Markierungspaarzeitabständen sondern auch einen vollständigen Satz von Markierungseigenzeitabständen erhält. Somit kann nunmehr nach einem der bereits beschriebenen Verfahren eine Überprüfung der Konstanz der Drehgeschwindigkeit des rotierenden Körpers erfolgen.

Ist diese Konstanz während eines Umlaufs gegeben, was im Regelfall früher oder später mit Sicherheit auftritt, so können die während dieser Umdrehung gewonnenen Markierungspaarzeitabstände als Eichwerte gespeichert und aus den Markierungseigenzeitabständen die während dieses Eichlaufs herrschende Geschwindigkeit errechnet und ebenfalls gespeichert werden. Dadurch, daß nun bei jeder folgenden Umdrehung jeder Markierungspaärzeitabstand mit seinem zugehörigen Eichwert verglichen wird, ist die erfindungsgemäße Vorrichtung in der Lage, auftretende Änderungen der Drehzahl bzw. Drehgeschwindigkeit sofort zu erkennen und eine entsprechende Anzeige zu liefern. Durch die ständige Nacheichung, die die erfindungsgemäße Vorrichtung selbsttätig vornimmt, können auftretende Drift- oder Schwankungserscheinungen immer sofort eliminiert werden, so daß sich eine Meßgenauigkeit und Langzeitkonstanz der gesamten Anordnung ergibt, die der mit einfachen Mitteln auf extrem gute Werte bringbaren Meßgenauigkeit und Langzeitkonstanz einer quarzgesteuerten Oszialltorschaltung entspricht.

## Patentansprüche

1. Verfahren zur Messung der Winkelgeschwindigkeit eines rotierenden Körpers, bei dem eine der Rotation des Körpers entsprechende Relativdrehung zwischen einem Markierungsträger, auf dem eine Vielzahl von in Drehrichtung voneinander beabstandeten Markierungen angebracht ist, und einer Abtasteinrichtung stattfindet, die wenigstens einen Meßfühler aufweist, der das Vorbeilaufen der Markierungen erfaßt und eine Folge von jeweils einer Markierung zugeordneten Signalen abgibt, dadurch gekennzeichnet, daß zunächst in einem Eichlauf einzelne Markierungen anhand ihrer zugeordneten Signale identifiziert, die Zeitabstände von identifizierten Markierungen zugeordneten Meßfühlersignalen bei bekannter Konstanter Winkelgeschwindigkeit gemessen und hieraus den Absolutwerten der Winkelabstände dieser Markierungen entsprechende Eichwerte ermittelt und gespeichert werden und daß bei den nachfolgenden Meßläufen die momentane Winkelgeschwindigkeit aus dem rechnerischen Vergleich wenigstens eines momentan gemessenen Zeitabstandes mit dem zugehörigen Eichwert gewonnen wird.

2. Verfahren nach Anspruch 1, dadurch gekennzeichnet, daß die Identifizierung von Markierungen mit Hilfe von Asymmetrien erfolgt, die in der durch die Markierungen auf dem Markierungsträger gebildeten Skala vorhanden sind.

3. Verfahren nach Anspruch 2, dadurch gekennzeichnet, daß mit Hilfe von Asymmetrien nur eine der Markierungen identifiziert wird, die dann als Null-Markierung bei der durch Abzählen der zugehörigen Meßfühlersignale erfolgenden Identifizierung der übrigen Markierungen dient.

4. Verfahren nach Anspruch 2 oder 3, dadurch gekennzeichnet, daß als Asymmetrie die einander nicht exakt gleichen Winkelabstände der auf dem Markierungsträger in Drehrichtung unmittelbar aufeinander folgenden Markierungen dienen.

5. Verfahren nach Anspruch 3 und 4, dadurch gekennzeichnet, daß eine der Markierungen dadurch als Null-Markierung festgelegt wird, daß der Winkelabstand zu einer ihrer unmittelbaren Nachbarmarkierungen wesentlich verschieden von den Winkelabständen aller anderen einander unmittelbar benachbarten Markierungen ausgebildet wird.

6. Verfahren nach einem der Ansprüche 1 bis 5, dadurch gekennzeichnet, daß als Zeitabstände Markierungspaarzeitabstände gemessen und Markierungseigenzeitabstände ermittelt werden, wobei es sich um die Zeitabstände von Meßfühlersignalen handelt, die im ersten Fall jeweils einem von zwei verschiedenen auf dem Markierungsträger in Richtung der Relativdrehung hintereinander angeordneten Markierungen gebildeten Markierungspaar und im zweiten Fall jeweils derselben Markierung zugeordnet sind.

7. Verfahren nach Anspruch 6, dadurch gekennzeichnet, daß die Markierungspaare von auf dem Markierungsträger in Richtung der Relativdrehung unmittelbar aufeinanderfolgenden Markierungen gebildet sind.

8. Verfahren nach Anspruch 6 oder 7, dadurch gekennzeichnet, daß beim Eichlauf in mehreren nacheinander beginnenden Meßreihen jeweils für mehrere, für jede Meßreihe jeweils gleiche Markierungspaare die Markierungspaarzeitabstände gemessen und zwischengespeichert werden, daß gleichzeitig für mehrere einzelne Markierungen die Markierungseigenzeitabstände ermittelt und zwischengespeichert werden, daß die eine Meßreihe bildenden Markierungspaarzeitabstände einzeln mit den entsprechenden Markierungspaarzeitabständen der vorausgehenden Meßreihe verglichen werden, und daß dann, wenn dieser Vergleich eine Übereinstimmung innerhalb vorgegebener Toleranzgrenzen ergibt, die Markierungspaarzeitabstände als Eichwerte längerfristig gespeichert werden, während aus den Markierungseigenzeitabständen der Mittelwert gebildet und als Maß für die zu dieser Zeit vorliegende Winkelgeschwindigkeit gespeichert und weiterverarbeitet wird.

9. Verfahren nach Anspruch 6 oder 7, dadurch gekennzeichnet, daß beim Eichlauf die Markierungseigenzeitabstände für mehrere einzelne Markierungen ermittelt, zwischengespeichert und miteinander verglichen werden, daß gleichzeitig die Markierungspaarzeitabstände für mehrere Markierungspaare gemessen und zwischengespeichert werden und daß dann, wenn der Vergleich der Markierungseigenzeitabstände eine Übereinstimmung innerhalb vorgegebener Toleranzgrenzen ergibt, die Markierungspaarzeitabstände als Eichwerte längerfristig gespeichert werden, während aus den Markierungseigenzeitabständen der Mittelwert gebildet und als Maß für die zu dieser Zeit vorliegende Winkelgeschwindigkeit gespeichert und weiterverarbeitet wird.

10. Verfahren nach Anspruch 8, dadurch gekennzeichnet, daß jede Meßreihe die Markierungspaarzeitabstände von sämtlichen auf dem Markierungsträger vorhandenen Markierungspaaren umfaßt.

11. Verfahren nach einem der Ansprüche 8 bis 10, dadurch gekennzeichnet, daß die Markierungseigenzeitabstände für alle auf dem Markierungsträger vorhandenen Markierungen ermittelt und zur Mittelwertbildung verwendet werden.

12. Verfahren nach einem der Ansprüche 6 bis 11, dadurch gekennzeichnet, daß die Ermittelung der Markierungseigenzeitabstände durch eine von der Messung der Markierungspaarzeitabstände unabhängige Messung des Zeitabstandes zwischen den entsprechenden Meßfühlersignalen erfolgt.

13. Verfahren nach einem der Ansprüche 6 bis 12, dadurch gekennzeichnet, daß bei jedem Meßlauf Markierungspaarzeitabstände und Markierungseigenzeitabstände gemessen und miteinander verglichen werden und daß immer dann, wenn der Vergleich eine Übereinstimmung innerhalb der vorgegebenen Toleranzgrenzen ergibt, der Meßlauf als neuer Eichlauf gewertet wird.

14. Verfahren nach einem der vorhergehenden Ansprüche, dadurch gekennzeichnet, daß die Abtasteinrichtung zwei bezüglich der Drehachse der Relativdrehung voneinander winkelmäßig beabstandete Meßfühler umfaßt, daß die beim Vorbeilaufen jeweils desselben Markierungspaares zuerst an dem einen und dann an dem anderen Meßfühler gemessenen Markierungspaarzeitabstände verschiedenen, nacheinander beginnenden Meßreihen zugeordnet werden und daß die Markierungseigenzeitabstände zwischen den elektrischen Signalen gemessen werden, die beim Vorbeilaufen derselben Markierung zuerst an dem einen und dann an dem anderen Meßfühler erzeugt werden.

15. Verfahren nach Anspruch 14, dadurch gekennzeichnet, daß die beiden Meßfühler einander bezüglich der Drehachse der Relativdrehung diametral gegenüberliegen und daß die beim Vorbeilaufen jeweils derselben Markierungspaare zuerst an dem einen und dann an dem anderen Meßfühler gemessenen Markierungspaarzeitabstände zur Erkennung von Präzessionsbewegungen und/oder Exzentrizitäten der Drehachse der Relativdrehung ausgewertet werden.

16. Verfahren nach einem der Ansprüche 7 bis 15, dadurch gekennzeichnet, daß die Markierungspaarzeitabstände sämtlicher auf dem Markierungsträger vorhandener Markierungspaare so gemessen

**0 039 900**

werden, daß der zeitliche Endpunkt einer jeden Einzelmessung mit dem zeitlichen Anfangspunkt der unmittelbar folgenden Einzelmessung identisch ist.

17. Verfahren nach Anspruch 16, dadurch gekennzeichnet, daß durch ein einer beliebig herausgegriffenen Markierung zugeordnetes Meßfühlersignal eine stetig weiterlaufende Zeitmessung ausgelöst wird und daß bei jedem folgenden Meßfühlersignal der gerade erreichte Zeitmeßwert ohne Unterbrechung der laufenden Zeitmessung erfaßt und weiterverarbeitet wird.

18. Verfahren nach Anspruch 17, dadurch gekennzeichnet, daß die Messung eines Zeitabstandes zwischen jeweils zwei Meßfühlersignalen durch das Abzählen der zwischen diesen Meßfühlersignalen auftretenden Schwingungsperioden eines frei laufenden Oszillators erfolgt und daß die zeitliche Lage eines Meßfühlersignals innerhalb der jeweiligen Schwingungsperiode des Oszillators mit Hilfe einer Zeit-Amplituden-Wandlerschaltung gemessen wird, die nach Triggerung durch ein Start-Signal ein in seiner Amplitude mit der Zeit stetig und monoton anwachsendes und somit ein Maß für die seit dem Start-Signal verstrichene Zeit bildendes Ausgangssignal liefert.

19. Verfahren nach Anspruch 18, dadurch gekennzeichnet, daß zur Messung des Zeitabstandes zwischen zwei Meßfühlersignalen die Zeit-Amplituden-Wandlerschaltung durch das frühere dieser beiden Meßfühlersignale gestartet, durch einen hierauf folgenden Nulldurchgang der Oszillatorschwingung angehalten und nach Speicherung der so gewonnenen Ausgangssignalamplitude als erster Zeit-Feinmeßwert zurückgesetzt wird, daß die Zeit-Amplituden-Wandlerschaltung durch das spätere Meßfühlersignal wieder gestartet, durch einen hierauf folgenden Nulldurchgang der Oszillatorschwingung angehalten und nach Speicherung der so gewonnenen Ausgangssignalamplitude als zweiter Zeit-Feinmeßwert zurückgesetzt wird, daß zur Gewinnung eines Zeit-Grobmeßwertes die Anzahl der zwischen den beiden Nulldurchgängen erfolgten Oszillatorschwingungen mit dem Kehrwert der Oszillatorfrequenz multipliziert wird und daß zur Ermitelung des Zeitabstandes der Meßfühlersignale der erste Zeit-Feinmeßwert zum Zeit-Grobmeßwert addiert und von der Summe der zweite Zeit-Feinmeßwert substrahiert werden.

20. Verfahren nach Anspruch 19, dadurch gekennzeichnet, daß zum Anhalten der Zeit-Amplituden-Wandlerschaltung der erste nach dem Meßfühlersignal auftretende, in vorgegebener Richtung erfolgende Nulldurchgang der Oszillatorschwingung Verwendung findet.

21. Verfahren nach einem der Ansprüche 18 bis 20, dadurch gekennzeichnet, daß die Zeit-Amplituden-Wandlerschaltung zwischen den Zeitabstandsmessungen immer wieder dadurch nachgeeicht wird, daß sie durch einen Nulldurchgang der Oszillatorschwingung gestartet und durch einen nachfolgenden Nulldurchgang der Oszillatorschwingung angehalten wird und daß der so erhaltene Zeitmeßwert der Zeit-Amplituden-Wandlerschaltung mit dem zwischen diesen beiden Nulldurchgängen der Oszillatorschwingung liegenden Zeitraum verglichen wird.

22. Verfahren nach einem der Ansprüche 18 bis 21, dadurch gekennzeichnet, daß das Anhalten der Zeit-Amplituden-Wandlerschaltung durch den entsprechenden Nulldurchgang der Oszillatorschwingung bei jeder Zeitabstandsmessung und bei jeder Eichmessung mit einer vorbestimmten zeitlichen Verzögerung erfolgt und daß die Zeit-Amplituden-Wandlerschaltung nach jeder dieser Messungen durch ein schaltungsintern erzeugtes Startsignal gestartet und durch ein gleichzeitig mit diesem Startsignal erzeugtes, ebenfalls der vorbestimmten zeitlichen Verzögerung unterworfenes Stoppsignal wieder angehalten wird und daß der so gewonnene Korrekturwert von dem vorausgehend gewonnenen Zeitmeßwert bzw. Eichmeßwert subtrahiert wird.

23. Verfahren nach einem der Ansprüche 1 bis 21, dadurch gekennzeichnet, daß durch jeden der Meßfühler aus den auf dem Markierungsträger angebrachten realen Markierungen ideale Marken abstrahiert und deren Zeitabstände gemessen werden, wobei der Durchgang eines aus dem vom Meßfühler beim Vorbeilaufen einer Markierung abgegebenen Signal abgeleiteten elektrischen Signals durch einen vorgegebenen konstanten Spannungspegel als ideale Marke dient.

24. Verfahren nach Anspruch 23, dadurch gekennzeichnet, daß als Meßfühler jeweils ein Differential-Fotoempfänger mit wenigstens einem nachgeschalteten differenzbildenden Glied Verwendung findet und daß der Null-Durchgang des von dem differenzbildenden Glied beim Vorbeilaufen einer Markierung am Differential-Fotoempfänger erzeugten Ausgangssignals als ideale Marke dient.

25. Vorrichtung zur Messung der Winkelgeschwindigkeit eines rotierenden Körpers gemäß dem Verfahren nach Anspruch 1, mit einem Markierungsträger (2), auf dem eine Vielzahl von in Drehrichtung voneinander beabstandeten Markierungen (3) angebracht ist, mit einer sich mit einer der Winkelgeschwindigkeit des rotierenden Körpers entsprechenden Winkelgeschwindigkeit bezüglich des Markierungsträgers relativ bewegenden Abtasteinrichtung (4), die wenigstens einen das Vorbeilaufen der Markierungen erfassenden und eine Folge von jeweils einer Markierung entsprechenden Signalen abgebenden Meßfühler (6) aufweist, und mit einer Meß- und Auswerteschaltung (10), dadurch gekennzeichnet, daß die Meß- und Auswerteschaltung (10) folgende Bestandteile umfaßt:

— einen dem Meßfühler (6) nachgeschalteten und dessen Ausgangssignale formenden Impulsformer (11),

— eine einzelne Markierungen (3) anhand der vom Impulsformer (11) abgegebenen Signale identifizierende Identifizierungsschaltung (13),

— eine die Zeitabstände der vom Impulsformer (11) abgegebenen Signale messende Zeitmeßeinheit (12),

— eine die Messung der Zeitabstände bestimmter Signale nach Maßgabe der Identifizierungsschaltung (13) veranlassende Steuerschaltung (14),

— einen mehrere Zeitabstandsmeßwerte speichernden Zwischenspeicher (15),

— eine neu gewonnene Zeitabstandsmeßwerte mit von denselben Markierungen abgeleiteten zwischengespeicherten Zeitabstandsmeßwerten vergleichende Vergleichsschaltung (16) und

— eine in Abhängigkeit vom Vergleichsergebnis Eichwerte und die momentane Winkelgeschwindigkeit berechnende Rechen- und Speicherschaltung (17).

26. Vorrichtung nach Anspruch 25, dadurch gekennzeichnet, daß der Meßfühler (6) Bestandteil einer eine Lichtquelle (5) aufweisenden Lichtschranke ist und aus einer Differential-Fotodiode (8,8) besteht, und daß der Impulsformer (11) wenigstens ein mit den beiden Ausgängen der Differential-Fotodiode (8, 8) verbundenes differenzbildendes Glied (20) sowie einen das Ausgangssignal des differenzbildenden Gliedes (20) mit einem vorgegebenen konstanten Spannungspegel vergleichenden Komparator (25) umfaßt.

27. Vorrichtung nach einem der Ansprüche 25 oder 26, dadurch gekennzeichnet, daß die Zeitmeßeinheit (12) einen quarzgesteuerten Oszillator (32), einen die Oszillatorperioden abzählenden Zähler (33) und eine durch die vom Impulsformer (11) abgegebenen Signale triggerbare und durch vom Quarzoszillator (32) abgegebene Signale anhaltbare Zeit-Amplituden-Wandlerschaltung (34) mit nachgeschaltetem Analog/Digital-Wandler (35) umfaßt.

28. Vorrichtung nach Anspruch 27, dadurch gekennzeichnet, daß dem Stopp-Eingang der Zeit-Amplituden-Wandlerschaltung (34) ein Verzögerungsglied (38) vorgeschaltet ist, daß die Zeitmeßeinheit (12) eine Schaltungsanordnung (39) zur Erzeugung und gleichzeitigen Abgabe eines Start- und eines Stoppsignals für die Zeit-Amplituden-Wandlerschaltung (34) umfaßt, und daß dem Analogausgang der Zeit-Amplituden-Wandlerschaltung (34) in paralleler Anordnung zwei Abtast- und Halte-Schaltungen (41, 42) nachgeschaltet sind, von denen die erste (41) zur Aufnahme und Speicherung von von der Zeit-Amplituden-Wandlerschaltung (34) abgegebenen Zeitmeßwerten und die zweite (42) zur Aufnahme und Speicherung der jeweils zugehörigen, von der Zeit-Amplituden-Wandlerschaltung (34) aufgrund der von der Schaltungsanordnung (39) erzeugten Start- und Stoppsignale abgegebenen Korrekturwerte ansteuerbar ist, und daß der Ausgang der ersten Abtast- und Halte-Schaltung (41) an den positiven Eingang und der Ausgang der zweiten Abtast- und Halte-Schaltung (42) an den negativen Eingang eines Differenzverstärkers (44) angeschlossen sind, dessen Ausgangssignal dem Analog/Digital-Wandler (35) zugeführt ist.

29. Vorrichtung nach einem der Ansprüche 26 bis 28, dadurch gekennzeichnet, daß die Markierungen (3) auf dem Markierungsträger (2) im wesentlichen senkrecht zur Richtung der Relativdrehung zwischen Markierungsträger (2) und Abtasteinrichtung (4) verlaufende Streifen sind, und daß die Breite eines jeden Markierungsstreifens größer als die Breite des Trennsteges (9) der Differential-Fotodiode (8) und kleiner als die Breite der Differential-Fotodiode (8) ist.

30. Vorrichtung nach Anspruch 29, dadurch gekennzeichnet, daß das Licht der Lichtquelle senkrecht auf die Oberfläche des Markierungsträgers (2) gerichtet ist und daß das in der Bahn des auftreffenden Lichtstrahls vom Markierungsträger reflektierte Licht mit Hilfe eines Strahlenteilers zum Meßfühler hin umgelenkt wird.

31. Vorrichtung nach einem der Ansprüche 25 bis 30, dadurch gekennzeichnet, daß der Markierungsträger (2) eine flache Scheibe mit sich etwa radial erstreckenden Markierungsstreifen (3) ist.

32. Vorrichtung nach einem der Ansprüche 25 bis 30, dadurch gekennzeichnet, daß der Markierungsträger ein kreiszylindrischer Körper mit auf seiner Mantelfläche etwa parallel zur Zylinderachse verlaufenden, streifenförmigen Markierungen ist.

33. Vorrichtung nach einem der Ansprüche 25 bis 30, dadurch gekennzeichnet, daß die Abtasteinrichtung (4) zwei einander bezüglich der Drehachse der Relativdrehung zwischen Markierungsträger (2) und Abtasteinrichtung (4) diametral gegenüberliegende Meßfühler aufweist.

## Claims

1. A method for measuring the angular velocity of a rotating body, in which a relative rotation, corresponding to the rotation of the body, occurs between a mark carrier on which are disposed a plurality of marks spaced apart in the direction of rotation, and a sensing device, which comprises at least one sensor which senses the passing of the marks and emits a series of signals each of which is assigned to one of the marks, characterized in that first, in a calibrating run, individual marks are identified by means of their assigned signals, the time distances of sensor signals assigned to identified marks are measured at a known constant angular velocity, and calibrating values corresponding to the absolute values of the angular distances of these marks are determined therefrom and stored, and in that in the subsequent measuring runs, the instantaneous angular velocity is obtained from the calculation comparison of at least one instantaneously measured time distance with the corresponding calibrating value.

2. A method according to claim 1, characterized in that the identification of marks is carried out by means of asymmetries present in the scale formed by the marks on the mark carrier.

3. A method according to claim 2, characterized in that only one of the marks is identified by means of asymmetries which then serves as zero mark for the identification of the remaining marks which is performed by counting the corresponding sensor signals.

4. A method according to claim 2 or 3, characterized in that the angular distances, which are not exactly alike, of marks following each other directly on the mark carrier in the direction of rotation serve as asymmetry.

5. A method according to claim 3 and 4, characterized in that one of the marks is determined as zero mark by making the angular distance to one of its directly adjacent marks substantially different from the angular distances of all other marks directly adjacent to one another.

6. A method according to any of claims 1 to 5, characterized in that as time distances mark pair time distances are measured and mark inherent time distances are determined, said mark pair time distances being time distances of sensor signals which are assigned respectively to a mark pair formed by two different marks disposed after each other on the mark carrier in the direction of the relative rotation, and said mark inherent time distances being time distances of sensor signals which are respectively assigned to the same mark.

7. A method according to claim 6, characterized in that the mark pairs are formed by marks directly following each other on the mark carrier in the direction of the relative rotation.

8. A method according to claim 6 or 7, characterized in that at said calibrating run in several series of measurements beginning after one another respectively the mark pair time distances are measured and then intermediately stored for a multiple of mark pairs, said mark pairs being the same ones for each series of measurements, in that the mark inherent time distances are simultaneously determined and intermediately stored for several individual marks, in that the mark pair time distances forming one measurement series are compared individually with the corresponding mark pair time distances of the preceding measurement series, and in that then, if this comparison shows a coincidence within predetermined tolerance limits, the mark pair time distances are stored for a longer period as calibrating values, whereas the mean value is calculated from the mark inherent time distances and is stored and processed further as a measure for the angular volocity prevailing at this time.

9. A method according to claim 6 or 7, characterized in that, at said calibrating run, for several individual marks the mark inherent time distances are determined, intermediately stored and compared with one another, in that simultaneously the mark pair time distances for several mark pairs are measured and intermediately stored, and in that then, if the comparison of the mark inherent time distances shows a coincidence within predetermined tolerance limits, the mark pair time distances are stored for a longer period as calibrating values, whereas the mean value is calculated from the mark inherent time distances and is stored and further processed as a mesure for the angular velocity prevailing at this time.

10. A method according to claim 8, characterized in that each series of measurements comprises the mark pair time distances for all mark pairs present on the mark carrier.

11. A method according to any of claims 8 to 10, characterized in that the mark inherent time distances are determined for all marks present on the mark carrier and are used for calculating the mean value.

12. A method according to any of claims 6 to 11, characterized in that the determination of the mark inherent time distances is carried out by means of a measurement of the time distance between the corresponding sensor signals which measurement is independent of the measurement of the mark pair time distances.

13. A method according to any of claims 6 to 12, characterized in that in each measuring run mark pair time distances and mark inherent time distances are measured and are compared with each other and in that said measuring run is always treated as a new calibrating run if the comparison shows a coincidence within the predetermined tolerance limits.

14. A method according to any of the preceding claims characterized in that the sensing device comprises two sensors spaced angularly apart with respect to the axis of rotation of the relative rotation, in that the mark pair time distances measured first at the one and then at the other sensor upon the passing of the same mark pair are assigned to different series of measurements beginning one after the other, and in that the mark inherent time distances are measured between the electric signals which are produced first at the one and then at the other sensor upon the passing of the same mark.

15. A method according to claim 14, characterized in that the two sensors are arranged diametrically opposite each other with respect to the axis of rotation of the relative rotation and in that the mark pair time distances which are measured upon the passing of the same mark pair first at the one and then at the other sensor are evalutated for the recognition of precession movements and/or eccentricies of the rotational axis of the relative rotation.

16. A method according to any of claims 7 to 15, characterized in that the mark pair time distances of all mark pairs present on the mark carrier are measured such that the termination of each individual measurement is identical to the starting of the immediately subsequent individual measurement.

17. A method according to claim 16, characterized in that a continuously continuing time measurement is triggered by a sensor signal assigned to a randomly selected mark and in that for each subsequent sensor signal the instantaneously obtained time measurement value is determined and processed further without interruption of the continuing time measurement.

18. A method according to claim 17, characterized in that the measurement of a time distance

# 0 039 900

between two respective sensor signals is carried out by counting the oscillation periods of a free-running oscillator occuring between said sensor signals, and in that the position as to time of a sensor signal within the respective oscillation period of the oscillator is measured by means of a time-amplitude converter circuit which upon triggering by means of a start signal produces an output signal which increases in its amplitude continuously and monotonically in time and which is thus a measure for the time having elapsed since the start signal.

19. A method according to claim 18, characterized in that for measuring the time distance between two sensor signals the time-amplitude converter circuit is started by the earlier one of these two sensor signals, is stopped by a subsequent zero-level crossing of the oscillator oscillation and is reset after the output signal amplitude thus obtained has been stored as a first precision time measurement value, in that the time-amplitude converter circuit is started again by the later sensor signal, is stopped by a subsequent zero-level crossing of the oscillator oscillation and is reset after the output signal amplitude thus obtained has been stored as a second precision time measurement value, in that the number of oscillator oscillations occurring between the two zero-level crossings is multiplied by the reciprocal value of the oscillator frequency for obtaining a coarse time measurement value, and in that, for determining the time distance of the sensor signals, said first precision time measurement value ist added to said coarse time measurement value and said second precision time measurement value is substracted from their sum.

20. A method according to claim 19, characterized in that the first zero-level crossing of the oscillator oscillation occurring in a predetermined direction after the sensor signal is used for stopping said time-amplitude converter circuit.

21. A method according to any of claims 18 to 20, characterized in that said time-amplitude converter circuit is re-calibrated over and again between the time distance measurements by starting it by a zero-level crossing of the oscillator oscillation and by stopping it by a subsequent zero-level crossing of the oscillator oscillation, and by comparing the time measuring value of said time-amplitude converter circuit thus obtained with the period of time between these two zero-level crossings of the oscillator oscillation.

22. A method according to any of claims 18 to 21, characterized in that the stopping of said time-amplitude converter circuit by the corresponding zero-level crossing of the oscillator oscillation is carried out with a predetermined time delay at each time distance measurement and at each calibrating measurement, and in that said time-amplitude converter circuit is started after each of these measurements by a start signal produced within the circuitry and is stopped by a stop signal which is produced simultaneously with this start signal and which is also subject to the predetermined time delay, and in that the correction value thus obtained is subtracted from the previously obtained time measurement value or calibrating measurement value.

23. A method according to any of claims 1 to 21, characterized in that ideal marks are abstracted by each of the sensors from the real marks disposed on the mark carrier, and in that the time distances of said ideal marks are measured, whereby the crossover of a predetermined constant voltage level by an electric signal being derived from the signal emitted by the sensor upon a passage of a mark serves as in ideal mark.

24. A method according to claim 23, characterized in that a differential photo receiver to the output of which at least one differential member is connected is used as a sensor, and in that the zero-level crossing of the output signal produced by the differential member when a mark passes said differential photo receiver serves as an ideal mark.

25. An apparatus for measuring the angular velocity of a rotating body according to the method as claimed in claim 1, comprising a mark carrier (2) on which a pluarality of marks (3) are disposed, spaced apart in the direction of rotation, further comprising a sensing device (4), which moves relatively with respect to said mark carrier at an angular velocity corresponding to the angular velocity of said rotating body and which comprises at least one sensor (6) which senses the passing of the marks and which emits a series of signals each of which corresponds respectively to a mark, and further comprising a measuring and evaluating circuit (10), characterized in that said measuring and evaluating circuit (10) consists of
— a pulse shaper (11) which is connected to the output and which shapes the output signals of said sensor (6),
— an identification circuit (13) which identifies individual marks (3) by means of the signals emitted by said pulse shaper (11),
— a time measuring unit (12) which measures the time distances of the signals emitted by said pulse shaper (11),
— a control circuit (14) which causes the measurement of the time distances of certain signals under the control of the identification circuit (13),
— an intermediate memory (15) which stores a plurality of time distance measurement values,
— a comparison circuit (16) which compares newly obtained time distance measurement values with intermediately stored time distance measurement values being derived from the same marks, and
— a calculation and storage circuit (17) which in dependence on the comparison result calculates calibrating values and the instantaneous angular velocity.

26. An apparatus according to claim 25, characterized in that the sensor (6) forms parts of a light barrier comprising a light source (5) and consists of a differential photo diode (8, 8), and in that the pulse

22

shaper (11) comprises at least one differential member (20) connected to the two outputs of the differential photo diode (8, 8) and a comparator (25) which compares the output signal of the differential member (20) with a predetermined constant voltage level.

27. An apparatus according to claims 25 or 26, characterized in that the time measuring unit (12) comprises a quarz-controlled oscillator (32), a counter (33) for counting the oscillator periods and a time-amplitude converter circuit (34) which is adapted to be triggered by signals emitted by the pulse shaper (11) and to be stopped by signals emitted by the quarz oscillator (32), with an analog to digital converter (35) connected to the output of said time-amplitude converter circuit.

28. An apparatus according to claim 27, characterized in that a delay member (38) is connected before the stop input of the time-amplitude converter circuit (34), in that the time measuring unit (12) comprises a circuit arrangement (39) for producing and simultaneously emitting a start and a stop signal for the time-amplitude converter circuit (34), and in that two sample-and-hold circuits (41, 42) are connected in parallel to the analog output of the time-amplitude converter circuit (34), the first of said sample-and-hold circuits (41) being triggered for receiving and storing time measurement values emitted by the time-amplitude converter circuit (34), and the second of said sample-and-hold circuits (42) being triggered for receiving and storing the respectively corresponding correction values emitted by the time-amplitude converter circuit (34) due to the start and stop signals produced by said circuit arrangement (39), and in that the output of the first sample-and-hold circuit (41) is connected to the positive input and the output of the second sample-and-hold circuit (42) is connected to the negative input of a differential amplifier (44) the output signal of which is fed to the analog to digital converter (35).

29. An apparatus according to any of claims 26 to 28, characterized in that the marks (3) on the mark carrier (2) are stripes which extend substantially perpendicular to the direction of the relative rotation between the mark carrier (2) and the sensing device (4), and in that the width of each mark stripe is larger than the width of the separating ridge (9) of the differential photo diode (8) and smaller than the width of the differential photo diode (8).

30. An apparatus according to claim 29, characterized in that the light of the light source is directed perpendicular to the surface of the mark carrier (2) and in that the light reflected by the mark carrier along the path of the impinging light beam is diverted to the sensor by means of a beam splitter.

31. An apparatus according to any of claims 25 to 30, characterized in that the mark carrier (2) is a flat disc with approximately radially extending mark stripes (3).

32. An apparatus according to any of claims 25 to 30, characterized in that the mark carrier is a circular cylindrical body having stripe-shaped marks on its generating surface which extend approximately parallel to the cylinder axis.

33. An apparatus according to any of claims 25 to 30, characterized in that the sensing device (4) comprises two sensors which are arranged diametrically opposite each other with respect to the rotational axis of the relative rotation between the mark carrier (2) and the sensing device (4).


## Revendications

1. Procédé de mesure de la vitesse angulaire d'un corps en rotation, dans lequel il se produit une rotation relative, correspondant à la rotation du corps, entre un support de repères sur lequel sont apposés de multiples repères espacés les uns des autres dans la direction de rotation, et un dispositif d'exploration qui présente au moins un capteur qui détecte le passage des repères et émet une succession de signaux correspondant chaque fois à un repère, caractérisé en ce que tout d'abord, en une opération d'étalonnage, on identifie des repères individuels d'après leurs signaux correspondants, on mesure, à une vitesse angulaire constante et connue, les intervalles de temps de signaux de capteur correspondant à des repères identifiés et on détermine d'après cela des valeurs d'étalonnage correspondant aux valeurs absolues des espacements angulaires de ces repères et on les mémorise, et en ce que lors des opérations de mesure suivantes, on obtient la vitesse angulaire momentanée d'après la comparaison par calcul d'au moins un intervalle de temps mesuré momentanément à la valeur d'étalonnage correspondante.

2. Procédé selon la revendication 1, caractérisé en ce que l'identification de repères s'effectue à l'aide d'asymétries qui existent dans l'échelle formée par les repères sur le support de repères.

3. Procédé selon la revendication 2, caractérisé en ce qu'à l'aide d'asymétries on identifie un seul des repères qui sert alors de repère zéro lors de l'identification des autres repères, s'effectuant par comptage des signaux de capteur correspondants.

4. Procédé selon l'une des revendications 2 et 3, caractérisé en ce que comme asymétries, on utilise les espacements angulaires des repères qui se succèdent directement sur le support de repères dans le sens de rotation, espacements qui ne sont pas exactement égaux entre eux.

5. Procédé selon les revendications 3 et 4, caractérisé en ce que l'on fixe l'un des repères comme repère zéro en rendant l'espacement angulaire relativement à l'un des repères qui en sont immédiatement voisins nettement différent des espacements angulaires de tous les autres repères immédiatement voisins l'un de l'autre.

6. Procédé selon l'une des revendications 1 à 5, caractérisé en ce que comme intervalles de temps,

0 039 900

on mesure des intervalles de temps de paires de repères et des intervalles de temps propre de repère, qui sont les intervalles de temps de signaux de capteur qui, dans le premier cas, correspondent chacun à une paire de repères formée par deux repères différents disposés l'un derrière l'autre sur le support de repères dans la direction de rotation relative, et dans le deuxième cas, chacun au même repère.

7. Procédé selon la revendication 6, caractérisé en ce que les paires de repères sont formées par des repères se succédant immédiatement sur le support de repères dans la direction de rotation relative.

8. Procédé selon l'une des revendications 6 et 7, caractérisé en ce que lors de l'opération d'étalonnage, dans chacune de plusieurs séries de mesures commençant successivement, on mesure et on mémorise de façon intermédiaire les intervalles de temps de paires de repères pour plusieurs paires de repères chaque fois semblables pour chaque série de mesures, en ce que simultanément pour plusieurs repères individuels on mesure les intervalles de temps propres de repères et on les mémorise de façon intermédiaire, en ce que l'on compare individuellement les intervalles de temps de paires de repères formant une série de mesures aux intervalles de temps de paires de repères correspondants de la série de mesures précédente, et en ce que, lorsque cette comparaison donne une concordance dans le cadre de limites de tolérance prescrites, on mémorise de façon plus durable les intervalles de temps de paires de repères en tant que valeurs d'étalonnage, tandis qu'en partant des intervalles de temps propres de repères, on forme la moyenne et on la mémorise et on la traite ultérieurement en tant que mesure de la vitesse angulaire existant à ce moment.

9. Procédé selon l'une des revendications 6 et 7, caractérisé en ce que lors de l'opération d'étalonnage, on détermine les intervalles de temps propres de repère pour plusieurs repères individuels, on les mémorise de façon intermédiaire et on les compare entre eux, en ce que simultanément on mesure les intervalles de temps de paires de repères pour plusieurs paires de repères et on les mémorise de façon intermédiaire, et en ce que lorsque la comparaison des intervalles de temps propre de repère donne une concordance entre des limites de tolérances prescrites, on mémorise de façon plus prolongée les intervalles de temps de paires de repères en tant que valeurs d'étalonnage, tandis qu'en partant des intervalles de temps propre de repère, on forme la moyenne et on la mémorise et on la traite ensuite, en tant que mesure de la vitesse angulaire existant à ce moment.

10. Procédé selon la revendication 8, caractérisé en ce que chaque série de mesures comprend les intervalles de temps de paires de repères de toutes les paires de repères existant sur le support de repères.

11. Procédé selon l'une des revendications 8 à 10, caractérisé en ce que l'on détermine les intervalles de temps propre de repère pour tous les repères existant sur le support de repères et qu'on les utilise pour la formation de moyenne.

12. Procédé selon l'une des revendications 6 à 11, caractérisé en ce que la détermination des intervalles de temps propre de repère s'effectue par une mesure de l'intervalle de temps entre les signaux de capteur correspondants, indépendante de la mesure des intervalles de temps de paires de repères.

13. Procédé selon l'une des revendications 6 à 12, caractérisé en ce qu'à chaque opération de mesure, on mesure des intervalles de temps de paires de repères et des intervalles de temps propre de repère et on les compare entre eux, et en ce que chaque fois que la comparaison donne une concordance dans le cadre des limites de tolérances prescrites, on interprète l'opération de mesure comme une nouvelle opération d'étalonnage.

14. Procédé selon l'une des revendications précédentes, caractérisé en ce que le dispositif d'exploration comprend deux capteurs espacés angulairement l'un de l'autre autour de l'axe de la rotation relative, en ce que l'on affecte les intervalles de temps de paires de repères mesurés, lors de chaque passage de la même paire de repères d'abord devant l'un des capteurs et ensuite devant l'autre, à différentes séries de mesures commençant l'une après l'autre, et en ce que l'on mesure les intervalles de temps propres de repère entre les signaux électriques qui sont engendrés lors du passage du même repère d'abord devant l'un des capteurs et ensuite devant l'autre.

15. Procédé selon la revendication 14, caractérisé en ce que les deux capteurs sont diamétralement opposés entre eux autour de l'axe de rotation relative, et en ce que l'on interprète les intervalles de temps de paires de repères mesurés lors de chaque passage de la même paire de repères d'abord devant l'un des capteurs et ensuite devant l'autre, pour reconnaître des mouvements de précession et/ou des excentricités de l'axe de rotation de la rotation relative.

16. Procédé selon l'une des revendications 7 à 15, caractérisé en ce que l'on mesure les intervalles de temps de paires de repères de toutes les paires de repères existant sur le support de repères de façon telle que le point final de chacune des mesures individuelles soit identique au point initial de la mesure individuelle qui suit immédiatement.

17. Procédé selon la revendication 16, caractérisé en ce que par un signal de capteur correspondant à un repère choisi arbitrairement est déclenchée une mesure de temps se poursuivant constamment et à chaque signal suivant du capteur, on détermine et on traite ensuite la valeur mesurée de temps précisément atteinte, sans interruption de la mesure de temps en cours.

18. Procédé selon la revendication 17, caractérisé en ce que la mesure d'un intervalle de temps chaque fois entre deux signaux de capteur s'effectue par comptage des périodes d'oscillation d'un oscillateur libre qui se produisent entre ces signaux de capteur, et en ce que l'on mesure la position dans le temps d'un signal de capteur à l'intérieur de la période d'oscillation considérée de l'oscillateur à l'aide

24

d'un circuit transducteur temps-amplitude qui, après déclenchement par un signal de démarrage, fournit un signal de sortie dont l'amplitude croît constamment et de façon monotone avec le temps et formant donc une mesure de temps écoulé depuis le signal de démarrage.

19. Procédé selon la revendication 18, caractérisé en ce que pour la mesure de l'intervalle de temps entre deux signaux du capteur, le circuit transducteur temps-amplitude est mis en marche par le plus précoce de ces deux signaux de capteur, en ce qu'il est arrêté par un passage par zéro de l'oscillation de l'oscillateur, se produisant ensuite et en ce qu'il est remis à zéro après mémorisation de l'amplitude ainsi obtenue du signal de sortie en tant que première valeur mesurée précise du temps, en ce que le circuit transducteur temps-amplitude est à nouveau mis en marche par le signal de capteur plus tardif, en ce qu'il est arrêté par un passage à zéro de l'oscillation de l'oscillateur, se produisant ensuite, et en ce qu'il est remis à zéro après mémorisation de l'amplitude ainsi obtenue du signal de sortie en tant que deuxième valeur mesurée précise du temps, en ce que pour l'obtention d'une valeur mesurée grossière du temps, on multiplie le nombre des oscillations de l'oscillateur qui ont eu lieu entre les deux passages par zéro, par l'inverse de la fréquence de l'oscillateur, et en ce que pour déterminer l'intervalle de temps des signaux de capteur, on additionne la première valeur mesurée précise du temps à la valeur mesurée grossière du temps et l'on soustrait, de la somme, la deuxième valeur mesurée précise du temps.

20. Procédé selon la revendication 19, caractérisé en ce que pour arrêter le circuit transducteur temps-amplitude, on utilise le premier passage par zéro de l'oscillation de l'oscillateur qui s'effectue, dans le sens prescrit, après le signal de capteur.

21. Procédé selon l'une des revendications 18 à 20, caractérisé en ce que le circuit transducteur temps-amplitude est réétalonné sans cesse entre les mesures d'intervalle de temps, par le fait qu'il est mis en route par un passage par zéro de l'oscillation de l'oscillateur et arrêté par un passage suivant par zéro de l'oscillation de l'oscillateur, et en ce que la valeur mesurée du temps du circuit transducteur temps-amplitude, ainsi obtenue, est comparée au laps de temps qui se situe entre ces deux passages par zéro de l'oscillation de l'oscillateur.

22. Procédé selon l'une des revendications 18 à 21, caractérisé en ce que l'arrêt du circuit transducteur temps-amplitude par le passage par zéro correspondant de l'oscillation de l'oscillateur, à chaque mesure d'intervalle de temps et à chaque mesure d'étalonnage, s'effectue avec un retard de temps prédéterminé et après chacune de ces mesures, le circuit transducteur temps-amplitude est mis en route par un signal de mise en route engendré au sein du circuit et est à nouveau arrêté par un signal d'arrêt engendré en même temps que ce signal de mise en route et également soumis au retard de temps prédéterminé, et en ce que l'on soustrait la valeur de correction ainsi obtenue de la valeur mesurée de temps ou valeur mesurée d'étalonnage obtenue précédemment.

23. Procédé selon l'une des revendications 1 à 21, caractérisé en ce que chacun des capteurs abstrait des marques idéales en partant des repères réels apposés sur le support de repères et mesure leurs intervalles de temps, le passage, par un niveau de tension constant prescrit, d'un signal électrique tiré d'un signal émis par le capteur au passage d'un repère servant de marque idéale.

24. Procédé selon la revendication 23, caractérisé en ce que comme capteur on utilise chaque fois un photorécepteur différentiel à la suite duquel est branché au moins un organe formateur de différence, et en ce que le passage par zéro du signal de sortie engendré par l'organe formateur de différence au passage d'un repère devant le photorécepteur différentiel sert de marque idéale.

25. Dispositif pour la mesure de la vitesse angulaire d'un corps en rotation selon le procédé selon la revendication 1, comportant un support de repères (2) sur lequel sont apposés de multiples repères (3) espacés l'un de l'autre dans la direction de rotation, un dispositif d'exploration (4) se mouvant relativement au support de repères à une vitesse angulaire correspondant à la vitesse angulaire du corps en rotation et qui présente au moins un capteur (6) détectant le passage des repères et émettant une succession de signaux correspondant chacun à un repère, ainsi qu'un circuit de mesure et d'interprétation (10), caractérisé en ce que le circuit de mesure et d'interprétation (10) comprend les composants suivants :

— un formeur d'impulsions (11) branché à la suite du capteur (6) et formant les signaux de sortie de celui-ci,

— un circuit d'identification (13) identifiant des repères individuels (3) d'après les signaux émis par le formeur d'impulsions (11),

— une unité de mesure de temps (12) mesurant les intervalles de temps des signaux émis par le formeur d'impulsions (11),

— un circuit de commande (14) occasionnant la mesure des intervalles de temps de signaux déterminés, conformément au circuit d'identification (13),

— une mémoire intermédiaire (15) mémorisant plusieurs valeurs mesurées d'intervalle de temps,

— un circuit comparateur (16) comparant des valeurs mesurées d'intervalle de temps nouvellement obtenues à des valeurs mesurées d'intervalles de temps tirées des mêmes repères et mémorisées de façon intermédiaire, et

— un circuit de calcul et de mémoire (17) calculant, sous la dépendance du résultat de la comparaison, des valeurs d'étalonnage et la vitesse angulaire momentanée.

26. Dispositif selon la revendication 25, caractérisé en ce que le capteur (6) est un composant d'une barrière photoélectrique présentant une source lumineuse (5) et est formé d'une photodiode différentielle

0 039 900

(8, 8) et le formeur d'impulsions (11) comprend au moins un organe formateur de différence (20) relié aux deux sorties de la photodiode différentielle (8, 8) ainsi qu'un comparateur (25) comparant le signal de sortie et l'organe formateur de différence (20) à un niveau de tension constant prescrit.

27. Dispositif selon l'une des revendications 25 et 26, caractérisé en ce que l'unité de mesure de temps (12) comprend un oscillateur commandé par quartz (32), un compteur (33) comptant les périodes de l'oscillateur et un circuit transducteur temps-amplitude (34) pouvant être déclenché par les signaux émis par le formeur d'impulsions (11) et pouvant être arrêté par des signaux émis par l'oscillateur à quartz (32), et à la suite duquel est branché un convertisseur analogique/numérique (35).

28. Dispositif selon la revendication 27, caractérisé en ce qu'avant l'entrée du circuit transducteur temps-amplitude (34) est branché un organe de retard (38), en ce que l'unité de mesure de temps (12) comprend une disposition de circuit (39) servant à engendrer et simultanément à émettre un signal de mise en route et un signal d'arrêt pour le circuit transducteur temps-amplitude (34), et à la suite de la sortie analogique du circuit transducteur temps-amplitude (34) sont branchés, en une disposition parallèle, deux circuits d'échantillonnage et de maintien (41, 42) dont le premier (41) peut être commandé pour recevoir et mémoriser des valeurs mesurées de temps émises par le circuit transducteur temps-amplitude (34) et le deuxième pour recevoir et mémoriser les valeurs de correction chaque fois correspondantes, émises par le circuit transducteur temps-amplitude (34) sur la base des signaux de mise en route et d'arrêt engendrés par la disposition du circuit (39), et en ce que la sortie du premier circuit d'échantillonnage et de maintien (41) est reliée à l'entrée positive et la sortie du deuxième circuit d'échantillonnage et de maintien (42) à l'entrée négative d'un amplificateur différentiel (44), dont le signal de sortie est amené au convertisseur analogique/numérique (35).

29. Dispositif selon l'une des revendications 26 à 28, caractérisé en ce que les repères (3) du support de repères (2) sont des bandes pratiquement dirigées perpendiculairement à la direction de la rotation relative entre support de repères (2) et dispositif d'exploration (4), et en ce que la largeur de chacune des bandes de marquage est plus grande que la largeur de la nervure de séparation (9) de la photodiode différentielle (8) et plus petite que la largeur de la photodiode différentielle (8).

30. Dispositif selon la revendication 29, caractérisé en ce que la lumière de la source lumineuse est dirigée perpendiculairement à la surface du support de repères (2), et en ce que la lumière réfléchie par le support de repères dans le trajet du faisceau lumineux incident est déviée en direction du capteur à l'aide d'un diviseur de rayons.

31. Dispositif selon l'une des revendications 25 à 30, caractérisé en ce que le support de repères (2) est un disque plat présentant des bandes de repère (3) à peu près dirigées radialement.

32. Dispositif selon l'une des revendications 25 à 30, caractérisé en ce que le support de repères est un corps cylindrique circulaire présentant des repères en forme de bande dirigés, sur sa surface latérale, à peu près parallèlement à l'axe du cylindre.

33. Dispositif selon l'une des revendications 25 à 30, caractérisé en ce que le dispositif d'exploration (4) présente deux capteurs diamétralement opposés entre eux autour de l'axe de rotation de la rotation relative entre support de repères (2) et dispositif d'exploration (4).

26

FIG.1

weitere
Verarbeitung

FIG.2

# FIG. 3

# FIG. 4

FIG. 5

Geber (11)

Analog/Digital-Wandler (35)

Rechner und Speicher (47)

Sample-and-Hold 1 (41)

Sample-and-Hold 2 (42)

(44)

Ablaufsteuerung (46)

Zeit-Amplituden-Wandler (34)

Zähler (33)

START (48)

STOP (38) Verz.

(50)

(49)

START-STOP-Steuerung E1 E2 (39)

Oszillator (32)

(12) (63) (60) (61) (62) (64)

3

FIG. 6